# EUROPEAN PATENT APPLICATION

(11) **EP 3 334 154 A1**
(43) Date of publication of application: **13.06.2018**
(21) Application number: 17201490.4
(22) Date of filing: 14.11.2017
(51) Int. Cl.: H04N 9/31, G06F 3/14, G09F 19/22

(54) **IMAGE PROJECTING SYSTEM AND IMAGE PROJECTING METHOD**

(30) Priority: 09.12.2016 JP 2016239709
(71) Applicant: Ricoh Company Ltd., Ohta-ku Tokyo 143-8555 (JP)
(72) Inventor: YOKOTA, Shun, Ohta-ku, Tokyo 143-8555 (JP)
(74) Representative: Watkin, Timothy Lawrence Harvey

(57) **Abstract**

An image projecting system includes: an area dividing part configured to divide a predetermined area so as to generate a plurality of divided areas; an image dividing part configured to divide, based on positions and sizes of a plurality of surfaces included in a single divided area of the plurality of divided areas, a single image assigned to the single divided area into a plurality of divided images; an input part configured to input a schedule for projecting, through projectors included in the single divided area, the plurality of divided images onto projection surfaces that respectively correspond to the plurality of surfaces included in the single divided area; and a generating part configured to generate schedule information by including the schedule without overlap, of a processing interval for projection of the plurality of divided images based on the schedule, with a processing interval of another schedule.

## Description

### BACKGROUND OF THE INVENTION

### 1. Field of the Invention

The disclosures herein generally relate to an image projecting system and an image projecting method.

### 2. Description of the Related Art

In recent years, digital signage has been widely used. Such digital signage delivers contents such as moving images to an image projecting apparatus such as a projector so as to project the contents onto a large screen, which is installed in an outside location, the front of a store, and a public space, for example. By making use of digital signage, contents suitable for the time and place can be projected in real time, allowing a high advertisement effect to be expected.

However, in order to install large-scale digital signage that uses an image projecting apparatus as described above, a flat surface having a certain size is required for projection. Therefore, for the digital signage that uses the image projecting apparatus, a large screen is required to be installed beforehand or the use of an extended flat surface of, for example, an exterior wall of a building is required. Thus, there is a problem in that locations at which to provide digital signage are limited.

For example, by making combined use of a plurality of surfaces such as windowpanes (light-transmitting surfaces) of a building (in particular, a medium-to-high-rise building), the large-scale digital signage can be provided. Providing such digital signage makes it possible to greatly widen an application range of digital signage.

In addition, more advertisers can be attracted if a schedule for simultaneously displaying a plurality of digital signage contents in each area of a single building for each time period can be set.

It is a general object of at least one embodiment of the present invention to properly set a schedule in order to provide digital signage that makes combined use of a plurality of surfaces.

### SUMMARY OF THE INVENTION

According to embodiments of the present invention, an image projecting system includes: an area dividing part configured to divide a predetermined area in which a plurality of surfaces are included so as to generate a plurality of divided areas; an image dividing part configured to divide, based on positions and sizes of the plurality of surfaces included in a single divided area of the plurality of divided areas, a single image assigned to the single divided area into a plurality of divided images; an input part configured to input a schedule for projecting, through projectors that respectively correspond to the plurality of surfaces included in the single divided area, the plurality of divided images onto projection surfaces that respectively correspond to the plurality of surfaces included in the single divided area; and a generating part configured to generate schedule information by including the schedule such that a processing interval for projection of the plurality of divided images through the projectors based on the schedule does not overlap with a processing interval for projection through any of the projectors based on another schedule.

According to at least one embodiment of the present invention, it is possible to properly set a schedule in order to provide digital signage that makes combined use of a plurality of surfaces.

### BRIEF DESCRIPTION OF THE DRAWINGS

FIG. 1 is a drawing illustrating an application example of an image projecting system;
FIGS. 2A through 2C are drawings illustrating operations of respective signage apparatuses placed at positions corresponding to respective windowpanes of a building;
FIG. 3 is a drawing illustrating an example of a system configuration of the image projecting system;
FIG. 4 is a drawing illustrating an example of a hardware configuration of an information processing apparatus;
FIGS. 5A and 5B are drawings illustrating an example of signage target information:
FIG. 6 is a drawing illustrating an example of moving image information;
FIG. 7 is a flowchart illustrating a flow of signage processing;
FIGS. 8A through 8E are first drawings for describing divided area generating processing and assignment processing;
FIGS. 9A through 9D are second drawings for describing divided area generating processing and assignment processing;
FIGS. 10A and 10B are drawings for describing image processing;
FIG. 11 is a drawing illustrating an example of projection moving image information for managing groups of projection moving images, which have been generated by the image processing;
FIGS. 12A and 12B are first drawings illustrating examples of a schedule generation screen;
FIGS. 13A and 13B are second drawings illustrating examples of the schedule generation screen;
FIG. 14 is a flowchart illustrating a flow of schedule generating processing;
FIGS. 15A through 15C are drawings illustrating an example of schedule information, an example of a preparation interval, and an example of an end interval;
FIG. 16 is a flowchart illustrating a flow of processing for determining whether schedule inclusion is possible;
FIGS. 17A through 17C are first drawings illustrating specific examples of the processing for determining whether schedule inclusion is possible; and
FIGS. 18A and 18B are second drawings illustrating specific examples of the processing for determining whether schedule inclusion is possible.

### DESCRIPTION OF THE PREFERRED EMBODIMENTS

In the following, embodiments of the present invention will be described with reference to the accompanying drawings. In the specification and drawings, elements having substantially the same functions or configurations are referred to by the same numerals and a duplicate description thereof will be omitted.

### [First Embodiment]

### <1. Application Example of Image Projecting System>

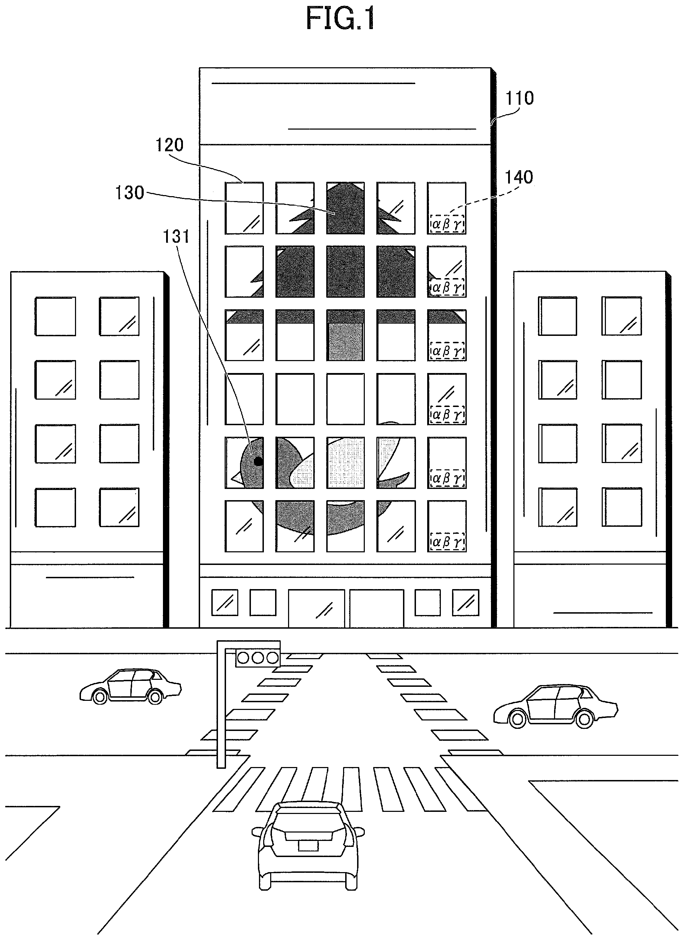

First, an application example of an image projecting system according to a first embodiment will be described. FIG. 1 is a drawing illustrating the application example of the image projecting system. FIG. 1 illustrates an example in which a plurality of large-sized digital signage contents are simultaneously displayed by making a combined use of a plurality of windowpanes (light-transmitting surfaces) placed at an outer surface of a building 110, which is a medium-rise building.

As illustrated in FIG. 1, a plurality of windowpanes (a group of windowpanes 120) are placed a predetermined distance apart in a predetermined area of the outer surface of the building 110 that faces a street (30 windowpanes in the example of FIG. 1). The image projecting system of the first embodiment internally projects respective projection moving images, which are included in a group of projection moving images 130, onto respective windowpanes installed on the upper floors, of the plurality of windowpanes (the group of windowpanes 120) installed in the predetermined area of the outer surface of the building 110. In addition, the image projecting system of the first embodiment internally projects respective projection moving images, which are included in a group of projection moving images 131, onto respective windowpanes of the lower floors, of the plurality of windowpanes (the group of windowpanes 120) installed in the predetermined area of the outer surface of the building 110.

According to the image projecting system of the first embodiment, in digital signage in which 15 windowpanes are combined for use, two large-sized digital signage contents are simultaneously displayed (FIG. 1 illustrates an example in which a large tree and a large bird are displayed). Also, according to the image projecting system of the first embodiment, such digital signage can be deployed in a relatively conspicuous space, for example, by making use of an outer surface of a building that faces a street. Namely, according to the image projecting system of the first embodiment, digital signage having a high advertisement effect can be provided.

Also, according to the image projecting system of the first embodiment, compared to conventional digital signage that uses a large screen installed beforehand or uses an exterior wall of a building having no windowpanes, it is possible to greatly widen an application range of digital signage.

Further, the image projecting system of the first embodiment also controls the operation of a group of illumination apparatuses 140 already placed inside the windowpanes. According to the image projecting system of the first embodiment, it is possible to control the group of illumination apparatuses 140 in accordance with the projection of the groups of projection moving images 130 and 131. Therefore, digital signage having a higher visual effect can be provided.

### <2. Operation of Each Signage Apparatus>

Next, operations of respective signage apparatuses (which refer to projectors (projecting apparatuses), electric screens (projection surfaces), and illumination apparatuses) will be described.

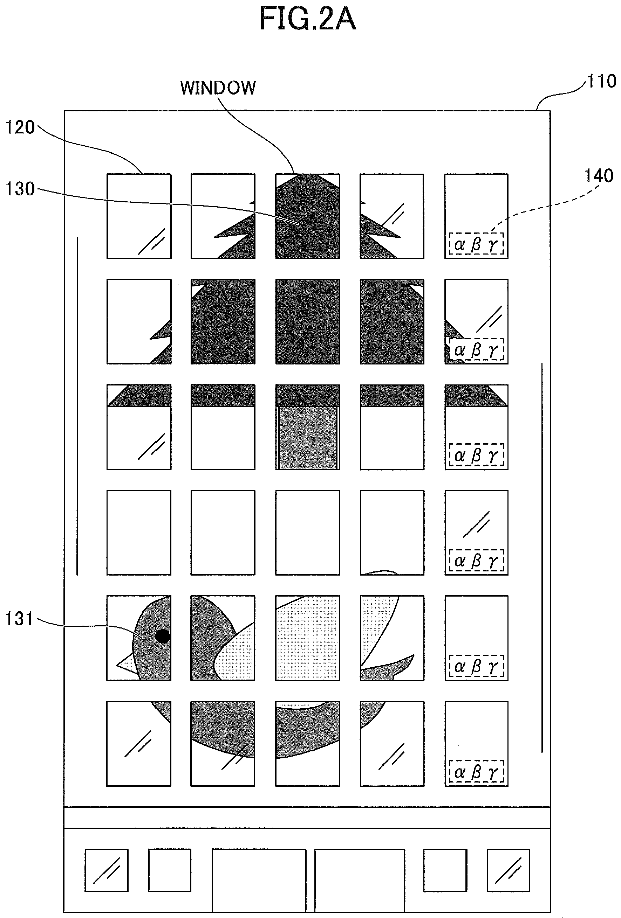

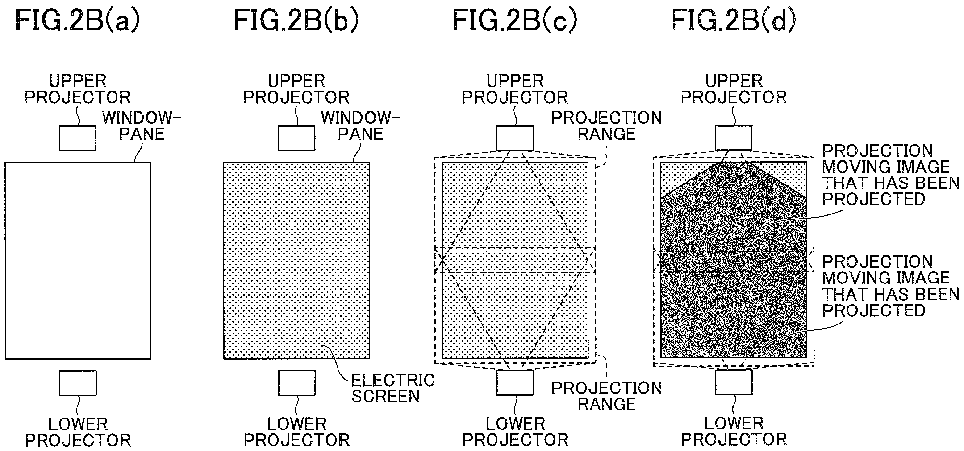

FIGS. 2A through 2C are drawings illustrating the operations of the respective signage apparatuses placed at positions corresponding to respective windowpanes of the building. FIGS. 2B (a) through 2B (d) illustrates the operations of the projectors and the electric screens of the respective signage apparatuses placed inside the respective windowpanes of the building 110.

As illustrated in FIG. 2B (a), the projectors are respectively placed at an upper side and a lower side of the inside of the respective windowpanes of the building 110. For each windowpane, two projectors (an upper projector and a lower projector) are used to project the projection moving images. This makes it possible to properly project the projection moving images even onto large-sized windowpanes.

Also, as illustrated in FIG. 2B (b), the electric screens are placed inside the respective windowpanes of the building 110. When the projection moving images are projected by using the projectors, the electric screens are turned on so that light transmittance is changed and the respective windowpanes are made translucent. An electric screen (projection surface), together with a windowpane (projection target), forms a light-transmitting surface.

FIG. 2B (c) illustrates a state in which lamps of the upper projector and the lower projector are turned on after the electric screen is turned on. The projection range of the upper projector covers the upper side of the windowpane and the projection range of the lower projector covers the lower side of the windowpane. Also, the projection range of the upper projector and the projection range of the lower projector are adjusted to partially overlap each other. Namely, in the present embodiment, by utilizing the two projectors, the projection moving images can be projected within a projection range corresponding to the size of the windowpane.

FIG. 2B (d) illustrates a state in which the projection moving images are projected by the upper projector and the lower projector. The image projecting system of the present embodiment projects each projection moving image included in the group of projection moving images 130 onto a respective electric screen, which corresponds to a respective windowpane of the upper floors, of the windowpanes included in the group of windowpanes 120. In addition, the image projecting system of the present embodiment projects each projection moving image included in the group of projection moving images 131 onto a respective electric screen, which corresponds to a respective windowpane of the lower floors, of the windowpanes included in the group of windowpanes 120. The respective projection moving images are further classified into upper and lower portions in order to be projected through the two projectors onto a respective electric screen corresponding to a respective windowpane.

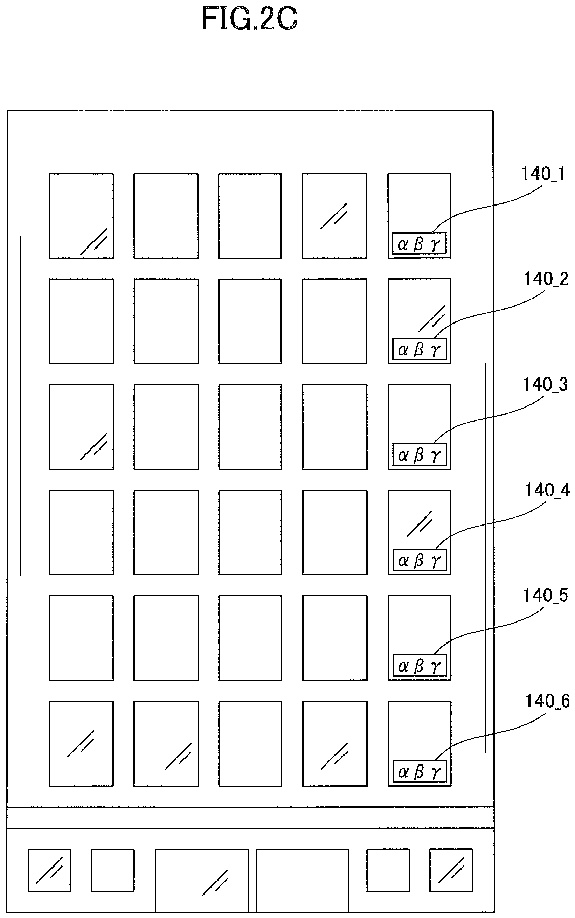

Also, as illustrated in FIG. 2C, the image projecting system of the first embodiment controls the group of illumination apparatuses 140 to be turned on and controls the electric screens to be turned off upon the completion of the projection of the groups of projection moving images 130 and 131. Namely, in the image projecting system of the first embodiment, the upper projectors, the lower projectors, the electric screens, and the group of illumination apparatuses 140 operate in conjunction with one another.

### <3. System Configuration of Image Projecting System>

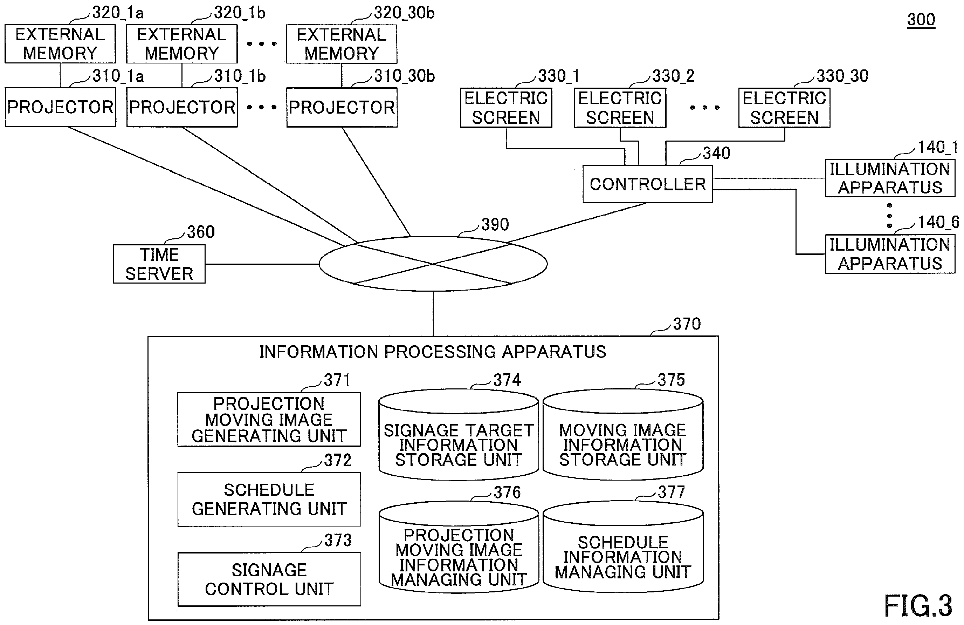

Next, a system configuration of the image projecting system of the first embodiment will be described. FIG. 3 is a drawing illustrating an example of the system configuration of the image projecting system. As illustrated in FIG. 3, an image projecting system 300 includes projectors 310_1a through 310_30b, external memories 320_1a through 320_30b, electric screens 330_1 through 330_30, a controller 340, and illumination apparatuses 140_1 through 140_6. Also, the image projecting system 300 includes a time server 360 and an information processing apparatus 370.

In addition, the projectors 310_1a through 310_30b, the controller 340, the time server 360, and the information processing apparatus 370 are connected via a network 390.

The projectors 310_1a through 310_30b are respectively placed at an upper side and a lower side of the inside of the respective windowpanes 120 installed in the predetermined area of the outer surface of the building 110. As described above, 30 windowpanes are installed in the predetermined area of the outer surface of the building 110. Therefore, a total of 60 projectors are placed.

Based on an instruction for starting projection from the information processing apparatus 370, the projectors 310_1a through 310_30b read designated projection moving images out of the projection moving images stored in the external memories 320_1a through 320_30b. Further, the projectors 310_1a through 310_30b project the projection moving images, which have been read respectively, onto the electric screens corresponding to respective windowpanes, which are projection targets.

The external memories 320_1a through 320_30b are connected to the projectors 310_1a through 310_30b, respectively. The external memories 320_1a through 320_30b store the projection moving images, which are projected by the projectors 310_1a through 310_30b, respectively. The external memories 320_1a through 320_30b as used herein include universal serial bus (USB) memories, for example.

The electric screens 330_1 through 330_30 are placed inside the respective windowpanes 120 included in the predetermined area of the outer surface. As described above, 30 windowpanes are installed in the predetermined area of the outer surface of the building 110. Therefore, in the present embodiment, 30 electric screens are placed.

The electric screens 330_1 through 330_30 are connected to the controller 340 via power cables. The controller 340 controls an on-state and an off-state of the electric screens 330_1 through 330_30, individually. When the electric screens 330_1 through 330_30 are controlled to be turned on by the controller 340, the light transmittance of the light-transmitting surface decreases and the light-transmitting surface is made translucent. Conversely, when the electric screens 330_1 through 330_30 are controlled to be turned off by the controller 340, the light transmittance of the light-transmitting surface increases and the light-transmitting surface is made transparent.

The controller 340 causes the electric screens 330_1 through 330_30 to be turned on based on an instruction for turning on screens from the information processing apparatus 370. Also, the controller 340 causes the electric screens 330_1 through 330_30 to be turned off based on an instruction for turning off screens from the information processing apparatus 370.

Further, the controller 340 causes the illumination apparatuses 140_1 through 140_6 to be turned on based on an instruction for turning on illumination apparatuses from the information processing apparatus 370. Also, the controller 340 causes the illumination apparatuses 140_1 through 140_6 to be turned off based on an instruction for turning off illumination apparatuses from the information processing apparatus 370.

The illumination apparatuses 140_1 through 140_6 are connected to the controller 340 via power cables. The controller 340 controls an on-state and an off-state of the illumination apparatuses 140_1 through 140_6.

The time server 360 provides the information processing apparatus 370 with time information so that the time is synchronized between the projectors 310_1a through 310_30b and the information processing apparatus 370.

The information processing apparatus 370 is an apparatus configured to control signage processing performed by the image projecting system 300. A program for generating projection moving images, a program for generating schedules, and a program for signage control are installed on the information processing apparatus 370. By executing these programs, the information processing apparatus 370 functions as a projection moving image generating unit 371, a schedule generating unit 372, and a signage control unit 373.

The projection moving image generating unit 371 functions as an area dividing part configured to divide the predetermined area, in which the group of windowpanes 120 is included, so as to generate a plurality of divided areas. The projection moving image generating unit 371 respectively assigns original moving images provided by an advertiser to the generated plurality of divided areas.

Also, the projection moving image generating unit 371 functions as an image dividing part configured to perform the image processing for dividing the assigned moving image into a plurality of divided images, based on sizes and positions of windowpanes included in the respective divided areas. As a result, a group of projection moving images is generated.

When generating the group of projection moving images, the projection moving image generating unit 371 uses signage target information stored in a signage target information storage unit 374 and moving image information stored in a moving image information storage unit 375. In addition, the projection moving image generating unit 371 causes the generated group of projection moving images to be contained in projection moving image information of a projection moving image information managing unit 376.

The signage target as used herein refers to the building 110 in which the image projecting system 300 provides digital signage. The signage target information contains information about positions, sizes, and the like of the respective windowpanes of the group of windowpanes 120 included in the predetermined area of the outer surface of the building 110. Also, the moving image information contains information about attributes of original moving images provided by advertisers. Further, the projection moving image information contains information for managing the generated group of projection moving images. Also, the projection moving image information contains identifiers indicating each projection moving image included in the generated group of projection moving images associated with identifiers indicating projectors that project the respective projection moving images.

Further, the projection moving image generating unit 371 sends the respective projection moving images included in the generated group of projection moving images to the corresponding projectors 310_1a through 310_30b, respectively. The projectors 310_1a through 310_30b receive the respective projection moving images and store the received projection moving images in the external memories 320_1a through 320_30b, respectively.

The schedule generating unit 372 functions as an input part configured to receive information necessary to generate a schedule for projecting the group of projection moving images, which have been generated by the projection moving image generating unit 371, onto the respective projection surfaces included in the corresponding divided areas. Also, the schedule generating unit 372 functions as a generating part configured to generate a schedule based on the received information. Further, the schedule generating unit 372 organizes a plurality of generated schedules by day of week and stores the organized schedules in a schedule information managing unit 377.

The signage control unit 373 performs signage control processing based on the schedule information stored in the schedule information managing unit 377. To be more specific, the signage control unit 373 sends an instruction for turning on lamps and an instruction for starting projection to the projectors 310_1a through 310_30b, respectively, in accordance with the projection start time. Also, the signage control unit 373 sends an instruction for turning on screens to the electric screens 330_1 through 330_30 in accordance with the projection start time. Further, the signage control unit 373 sends an instruction for turning off illumination apparatuses to the respective illumination apparatuses 140_1 through 140_6 in accordance with the projection start time.

Similarly, the signage control unit 373 sends an instruction for turning off lamps and an instruction for ending projection to the projectors 310_1a through 310_30b, respectively. Also, the signage control unit 373 sends an instruction for turning off screens to the electric screens 330_1 through 330_30 in accordance with the projection end time. Further, the signage control unit 373 sends an instruction for turning on illumination apparatuses to the respective illumination apparatuses 140_1 through 140_6 in accordance with the projection end time.

### <4. Hardware Configuration of Information Processing Apparatus>

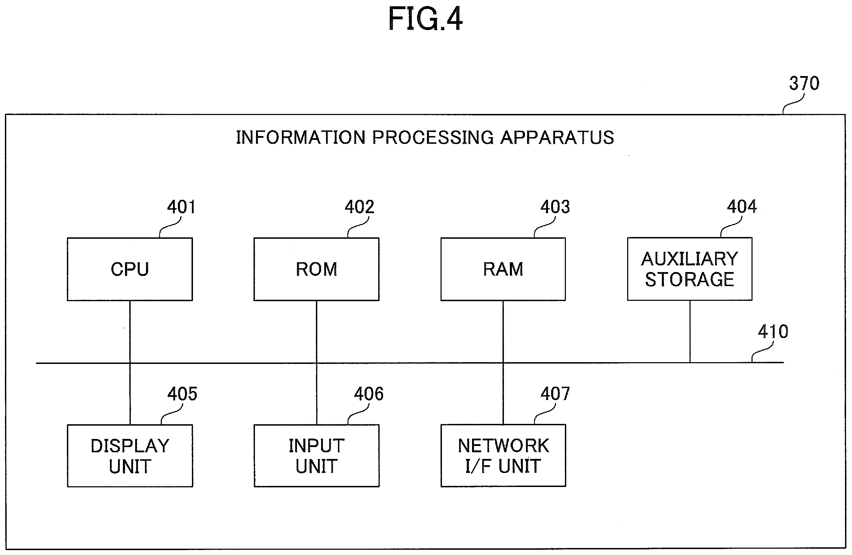

Next, a hardware configuration of the information processing apparatus 370 will be described. FIG. 4 is a drawing illustrating an example of the hardware configuration of the information processing apparatus.

As illustrated in FIG. 4, the information processing apparatus 370 includes a central processing unit (CPU) 401, read-only memory (ROM) 402, and random access memory (RAM) 403. The CPU 401, the ROM 402, and the RAM 403 constitute what is known as a computer. Further, the information processing apparatus 370 includes an auxiliary storage 404, a display unit 405, an input unit 406, and a network interface (I/F) unit 407. Also, the respective hardware of the information processing apparatus 370 is interconnected via a bus 410.

The CPU 401 is a device configured to execute various programs (such as the program for generating moving images, the program for generating schedules, and the program for signage control, for example) stored in the auxiliary storage 404.

The ROM 402 is a non-volatile main memory device. The ROM 402 stores various programs, data, and the like necessary for the CPU 401 to execute various programs stored in the auxiliary storage 404. To be more specific, boot programs such as the Basic Input/Output System (BIOS) and the Extensible Firmware Interface (EFI) are stored.

The RAM 403 is a volatile main memory device such as dynamic random access memory (DRAM) and static random access memory (SRAM). The RAM 403 provides a working area for the CPU 401 to execute the various programs stored in the auxiliary storage 404.

The auxiliary storage 404 is an auxiliary storage device that stores various programs executed by the CPU 401 and stores various information used when such various programs are executed. Various information stored in the auxiliary storage 404 includes the signage target information, the moving image information, the projection moving image information, and the schedule information. Further, the signage target information storage unit 374, the moving image information storage unit 375, the projection moving image information managing unit 376, and the schedule information managing unit 377 are implemented by the auxiliary storage 404.

The display unit 405 is a display device configured to display various screens. The input unit 406 is an input device configured to input various information into the information processing apparatus 370. The network I/F unit 407 is an interface device for connection to the network 390. The information processing apparatus 370 communicates with the projectors 310_1a through 310_30b, the controller 340, and the time server 360 via the network I/F unit 407.

### [5. Information Stored in Respective Storage Units]

Next, various information (the signage target information and the moving image information) stored in the respective storage units (the signage target information storage unit 374 and the moving image information storage unit 375) of the information processing apparatus 370 will be described.

### (1) Signage Target Information

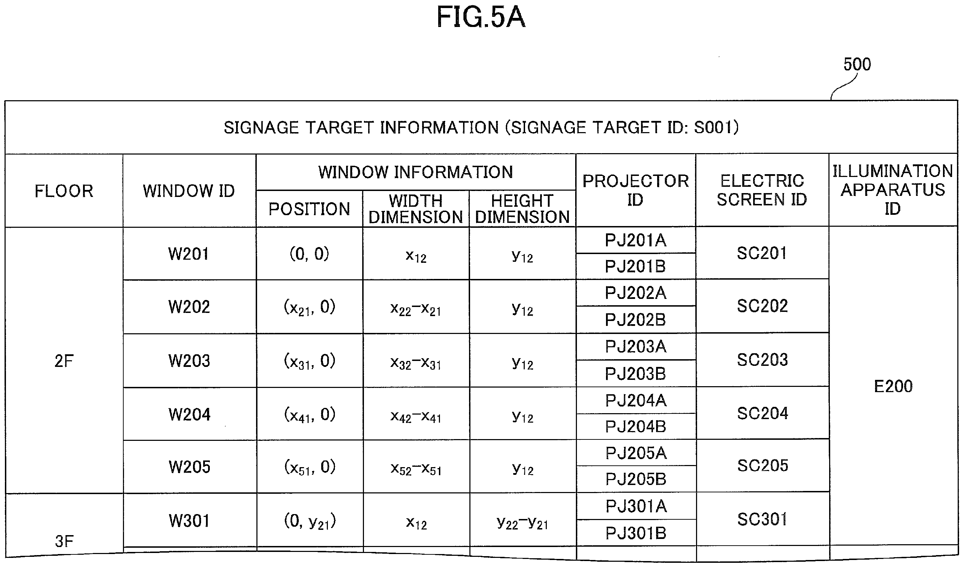

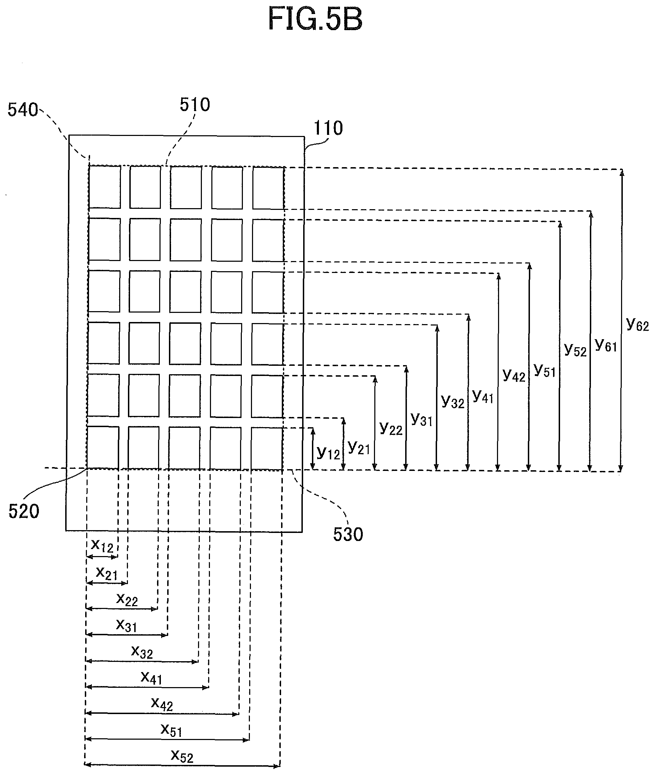

First, signage target information stored in the signage target information storage unit 374 will be described. FIGS. 5A and 5B are drawings illustrating an example of the signage target information. As illustrated in FIG. 5A, signage target information 500 is generated for each signage target. In the present embodiment, the signage target ID of the building 110 is "S001".

Also, as illustrated in FIG. 5A, the signage target information 500 includes information items "floor," "window ID," "window information," "projector ID," "electric screen ID," and "illumination apparatus ID".

The "floor" contains floor numbers of floors, on which the group of windowpanes 120 included in the predetermined area of the outer surface of the building 110 are installed.

The "window ID" contains identifiers for identifying each windowpane of the group of windowpanes 120 included in the predetermined area of the outer surface of the building 110.

The "window information" contains "position," "width dimension," and "height dimension." Referring now to FIG. 5B, the "position," "width dimension," and "height dimension" of each windowpane included in the "window information" will be described.

As illustrated in FIG. 5B, the image projecting system 300 provides digital signage by making use of a predetermined area 51 of the building 110. To this end, the image projecting system 300 defines a point (origin) and axes (x-axis and y-axis), both serving as references for specifying a layout of each windowpane included in the predetermined area 510.

In FIG. 5B, a point 520 represents an origin in the predetermined area 510. Also, an axis 530 represents an x-axis in a case where the point 520 serves as the origin in the predetermined area 510. An axis 540 represents a y-axis in a case where the point 520 serves as the origin in the predetermined area 510.

By defining the predetermined area 510, the origin 520, the x-axis 530, and the y-axis 540 as illustrated in FIG. 5B, a layout (position, width dimension, and height dimension) of each windowpane can be uniquely specified.

Returning to FIG. 5A, the "position" contains coordinates representing a position of the bottom left corner of each windowpane in the predetermined area 510 of the outer surface of the building 110. In FIG. 5A, the coordinates of the position of the bottom left corner of the window ID "W201" represent the origin (0, 0).

The "width dimension" contains a length in the lateral direction (width) of each windowpane. For example, in the case of a windowpane whose window ID is "W201," the coordinates of the position of the bottom left corner are (0, 0), and the coordinates of the position of the bottom right corner are (x₁₂, 0). Therefore, the width dimension is x₁₂. Further, in the case of a windowpane whose window ID is "W202," the coordinates of the position of the bottom left corner are (x₂₁, 0), and the coordinates of the position of the bottom right corner are (x₂₂, 0). Therefore, the width dimension becomes "x₂₂ - x₂₁."

The "height dimension" contains a length in the vertical direction (height). For example, in the case of the windowpane whose window ID is "W201," the coordinates of the position of the bottom left corner are (0, 0), and the coordinates of the position of the upper left corner are (0, y₁₂). Therefore, the height dimension is y₁₂. Further, in the case of a windowpane whose window ID is "W301," the coordinates of the position of the bottom left corner are (0, y₂₁), and the coordinates of the position of the upper left corner are (0, y₂₂). Therefore, the height dimension becomes *"*y₂₂ *-* y₂₁."

The "projector ID" contains identifiers for identifying a respective projector placed at a position corresponding to a respective windowpane. The example of FIG. 5A illustrates that the projectors identified by the projector IDs "PJ201A" and "PJ201B" are placed at a position corresponding to the windowpane identified by the window ID "W201".

The "electric screen ID" contains identifiers for identifying a respective electric screen placed at a position corresponding to a respective windowpane. The example of FIG. 5A illustrates that the electric screen identified by the electric screen ID "SC201" is placed at a position corresponding to the windowpane identified by the window ID "W201".

The "illumination apparatus ID" contains identifiers for identifying each illumination apparatus placed at a position corresponding to any windowpane of each floor. The example of FIG. 5A illustrates that the illumination apparatus identified by the illumination apparatus ID "E200" is placed at the floor identified by the floor "E200".

### (2) Moving Image Information

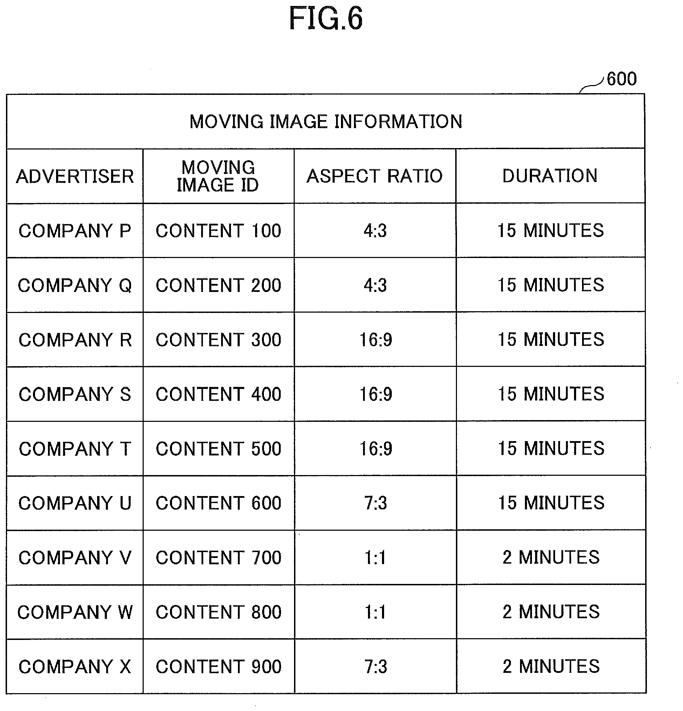

Next, moving image information stored in the moving image information storage unit 375 will be described. FIG. 6 is a drawing illustrating an example of the moving image information. The moving image information 600 contains information such as information about attributes of original moving images provided by advertisers.

As illustrated in FIG. 6, the moving image information 600 includes information items "advertiser," "moving image ID," "aspect ratio," and "duration."

The "advertiser" contains names of advertisers who desire to use digital signage. The "moving image ID" contains identifiers for identifying original moving images provided by advertisers.

The "aspect ratio" contains aspect ratios of original moving images provided by advertisers. The "duration" contains the duration of original moving images provided by advertisers.

### [6. Flow of Signage Processing Executed by Image Projecting System]

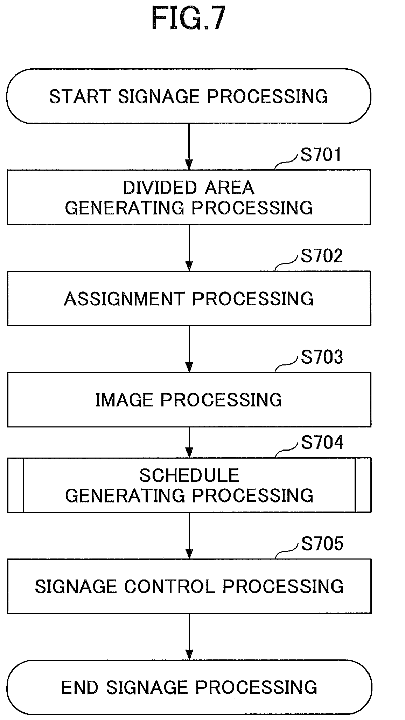

Next, a flow of signage processing executed by the image projecting system 300 will be described. FIG. 7 is a flowchart illustrating the flow of the signage processing. In the building 110, after the placement of the image projecting system 300 is completed and various types of calibration of the projectors 310_1a through 310_30b are performed, the image projecting system 300 executes the signage processing illustrated in FIG. 7.

To be more specific, in step S701, the projection moving image generating unit 371 of the information processing apparatus 370 generates a plurality of divided areas.

In step S702, the projection moving image generating unit 371 of the information processing apparatus 370 performs assignment processing for assigning a moving image ID of an original moving image provided by an advertiser to each of the generated plurality of divided areas.

In step S703, the projection moving image generating unit 371 of the information processing apparatus 370 performs the image processing based on the assignments as a result of the assignment processing. To be more specific, based on the position and the size of each windowpane included in the divided area having the moving image ID assigned, the moving image identified by the assigned moving image ID is divided and a group of projection moving images is generated. Further, the projection moving image generating unit 371 of the information processing apparatus 370 sends each projection moving image, which is included in the generated group of projection moving image, to a respective projector corresponding to a respective windowpane included in the divided area.

In step S704, the schedule generating unit 372 of the information processing apparatus 370 generates a schedule for projecting the group of projection moving images generated by the projection moving image generating unit 371 onto a respective projection surface included in the corresponding divided area. Further, the schedule generating unit 372 of the information processing apparatus 370 generates schedule information by organizing the generated plurality of schedules by day of week, and stores the generated schedule information in the schedule information managing unit 377.

In step S705, the signage control unit 373 of the information processing apparatus 370 performs the signage control processing. To be more specific, the signage control unit 373 of the information processing apparatus 370 controls the projection of each projection moving image via the projectors 310_1a through 310_30b based on the schedule information. Also, the signage control unit 373 of the information processing apparatus 370 controls the ON/OFF states of the electric screens 330_1 through 330_30 and controls the ON/OFF states of the illumination apparatuses 140_1 through 140_6 based on the schedule information.

Hereinafter, the details of each step (steps S701 through S705) included in the signage processing illustrated in FIG. 7 will be described.

### [7. Details of Divided Area Generating Processing and Assignment Processing]

First, the details of the divided area generating processing (step S701) and the assignment processing (step S702) performed by the projection moving image generating unit 371 will be described.

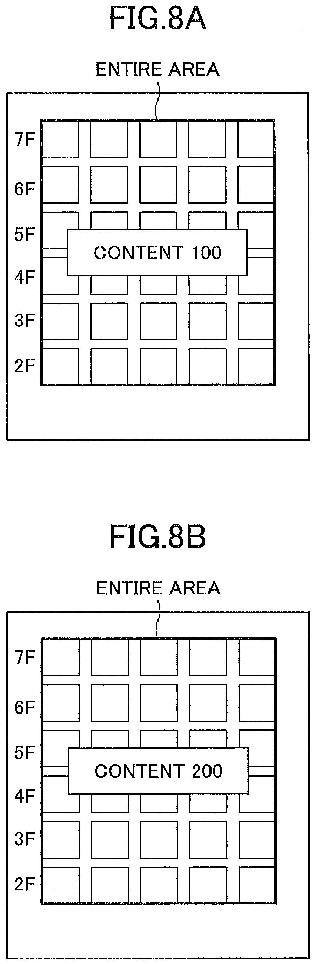

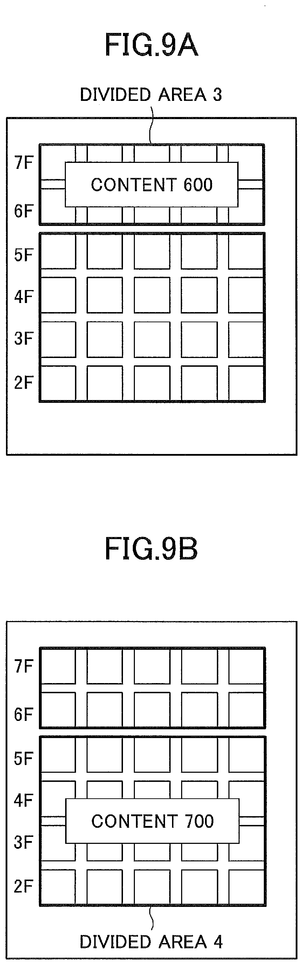

FIGS. 8A through 8E and FIGS. 9A through 9D are first drawings and second drawings, respectively, for describing the divided area generating processing and the assignment processing.

FIG. 8A illustrates that the moving image ID "content 100" is assigned to the entire predetermined area (hereinafter referred to as "entire area") of the building 110. Similarly, FIG. 8B illustrates that the moving image ID "content 200" is assigned to the entire area of the building 110.

In the present embodiment, a moving image ID can be assigned to the entire area of the building 110. In addition, in the present embodiment, different moving image IDs can be assigned to the same area (entire area) (see FIG. 8A and FIG. 8B).

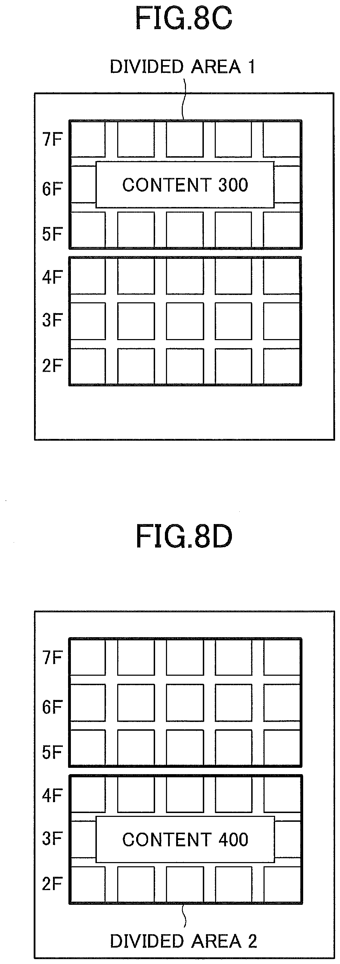

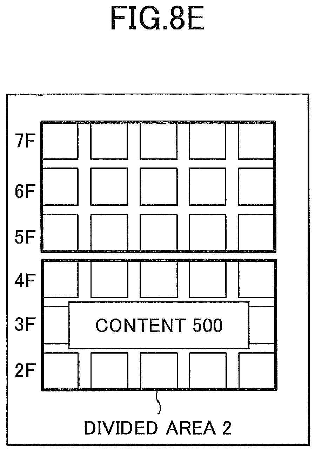

FIG. 8C illustrates that the moving image ID "content 300" is assigned to a divided area 1. By dividing the predetermined area of the building 110, the divided area 1 including windowpanes installed on the upper floors (5th floor through 7th floor) is generated. FIG. 8D and 8E illustrate that the moving image IDs "content 400" and "content 500" are assigned to a divided area 2. By dividing the predetermined area of the building 110, the divided area 2 including windowpanes installed on the lower floors (2nd floor through 4th floor) is generated.

In this way, two groups of projection moving images can be simultaneously projected during the same time period by assigning different moving image IDs to different divided areas, which do not overlap each other (see FIG. 8C and FIG. 8D or FIG. 8C and FIG. 8E).

FIG. 9A illustrates that the moving image ID "content 600" is assigned to a divided area 3. By dividing the predetermined area of the building 110, the divided area 3 including windowpanes installed on the 6th floor and the 7th floor is generated. Also, FIG. 9B illustrates that the moving image ID "content 700" is assigned to a divided area 4. By dividing the predetermined area of the building 110, the divided area 4 including windowpanes installed on the 2nd floor through the 5th floor is generated.

In the present embodiment, by dividing the predetermined area of the building 110 into divided areas having different aspect ratios, the moving image ID of the moving image having the corresponding aspect ratio can be assigned. In this way, it is possible to provide digital signage that allows moving images having different aspect ratios to be displayed.

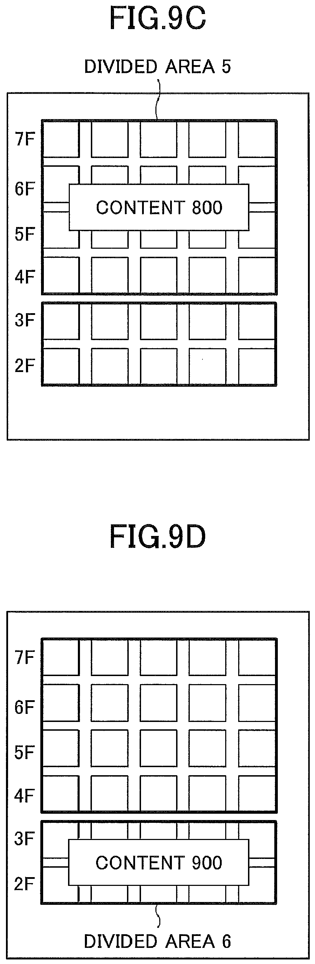

FIG. 9C illustrates that the moving image ID "content 800" is assigned to a divided area 5. By dividing the predetermined area of the building 110, the divided area 5 including windowpanes installed on the 4th floor through the 7th floor is generated. Also, FIG. 9D illustrates that the moving image ID "content 900" is assigned to a divided area 6. By dividing the predetermined area of the building 110, the divided area 6 including windowpanes installed on the 2nd floor and the 3rd floor is generated.

Further, for the divided area 3 (FIG. 9A and the divided area 6 (FIG. 9D), the areas are located in different positions, but have the same size and the same aspect ratio. Similarly, for the divided area 4 (FIG. 9B) and the divided area 5 (FIG. 9C), the areas are located in different positions, but have the same size and the same aspect ratio.

In the present embodiment, it is possible to generate a divided area in any size at any position within the predetermined area of the building 110 and assign a moving image ID of a moving image that corresponds to the position and the size.

### [8. Details of Image Processing]

Next, the details of the image processing (step S703) performed by the projection moving image generating unit 371 will be described. As an example herein, a case will be described in which a moving image of the moving image ID "content 400," which has been assigned to the divided area 2 of the building 110, is divided and a group of projection moving images is generated.

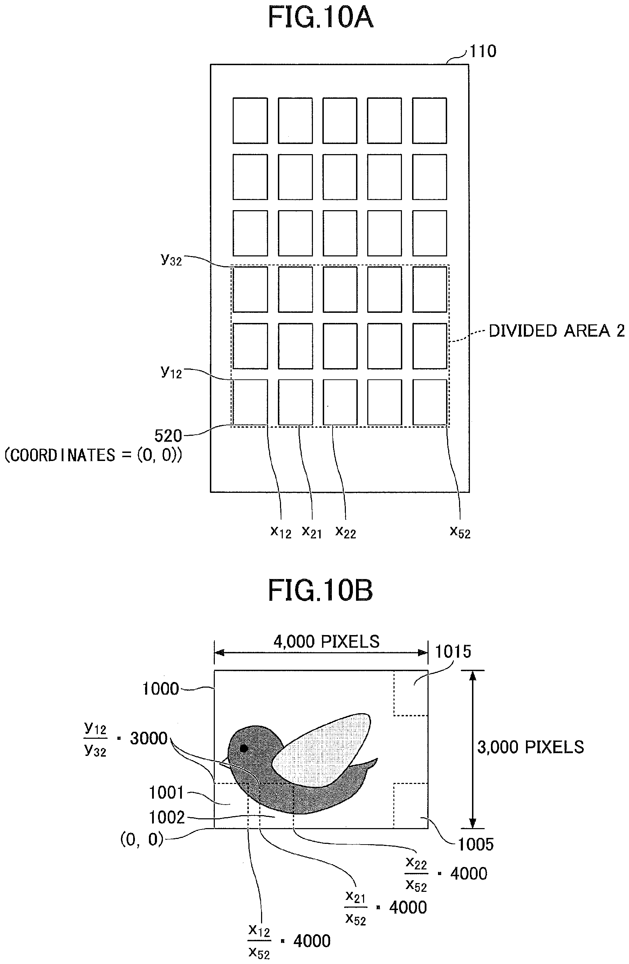

FIGS. 10A and 10B are drawings for describing the image processing. In FIG. 10A, a still image 1000 is one of a group of still images, which have been extracted by decoding the moving image of the moving image ID "content 400" and dividing into frame units.

The projection moving image generating unit 371 obtains a position and a size of each windowpane included in the divided area 2 by referring to the signage target information 500 (see FIG. 10A). Also, the projection moving image generating unit 371 performs image processing for the still image 1000 based on the obtained position and size of each windowpane, and generates a plurality of divided still images 1001, 1002 through 1015.

As illustrated in FIG. 10B, when the still image 1000 is assumed to have a width of 4,000 pixels and a height of 3,000 pixels, an x-coordinate of the bottom right pixel of the divided still image 1001 is calculated by (x₁₂/x₅₂) · 4000. In addition, a y-coordinate of the top left pixel of the divided still image 1001 is calculated by (y₁₂/y₃₂) · 3000.

Similarly, an x-coordinate of the bottom left pixel of the divided still image 1002 is calculated by (x₂₁/x₅₂) · 4000. An x-coordinate of the bottom right pixel of the divided still image 1002 is calculated by (x₂₂/x₅₂) · 4000. A y-coordinate of the top left pixel of the divided still image 1002 is calculated by (y₁₂/y₃₂) · 3000.

The projection moving image generating unit 371 generates the plurality of divided still images 1001 through 1015 for each group of still images extracted from the moving image. In addition, the projection moving image generating unit 371 classifies the generated plurality of divided still images 1001 through 1015 into a same group of divided still images for each windowpane so as to generate a plurality of groups of divided still images.

In addition, the projection moving image generating unit 371 divides, for each projector, the plurality of groups of divided still images, which have been classified for each windowpane. Further, the projection moving image generating unit 371 encodes, for each projector, the plurality of groups of divided still images, which have been classified for each projector, so as to generate a plurality of projection moving images (a group of projection moving images).

The projection moving image generating unit 371 performs the above-described image processing for each moving image of the moving image ID, which has been assigned to a respective divided area. Accordingly, the projection moving image generating unit 371 generates a group of projection moving images for a respective divided area, and causes such a group of projection moving images to be contained in the projection moving image information of the projection moving image information managing unit 376.

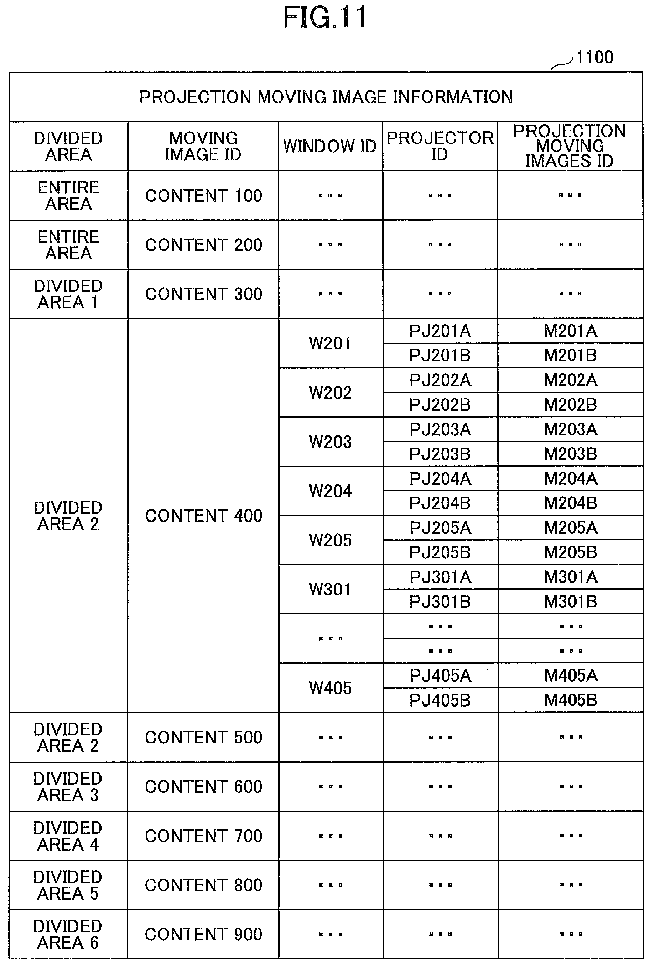

FIG. 11 is a drawing illustrating an example of projection moving image information for managing groups of projection moving images, which have been generated by the image processing. As illustrated in FIG. 11, projection moving image information 1100 of the projection moving image information managing unit 376 includes information items "divided area," "moving image ID," "window ID," "projector ID," and "projection moving images ID".

The "divided area" contains names of respective divided areas generated by dividing the predetermined area 510. The example of FIG. 11 illustrates that the predetermined area 510 is divided, and divided areas 1 through 6 are generated. The names of the divided areas contained in the "divided area" are associated with the "window ID". Namely, by referring to the projection moving image information 1100, each windowpane included in each of the generated divided areas can be identified.

In the "moving image ID," identifiers (moving image IDs) for identifying original moving images provided by advertisers are contained in association with the assigned divided areas. The example of FIG. 11 illustrates that the moving image ID "content 100" of moving image IDs included in the moving image information 600 is assigned to the entire predetermined area 510. Also, it is illustrated that the moving image IDs "content 300" through "content 900" are assigned to the divided areas 1 through 6.

The "window ID" contains identifiers for identifying each windowpane of the group of windowpanes 120 included in the predetermined area 510 of the outer surface of the building 110.

The "projector ID" contains identifiers for identifying projectors placed at locations corresponding to the respective windowpanes identified by the window ID.

The "projection moving images ID" contains identifiers for identifying respective projection moving images included in respective groups of projection moving images, which have been generated from the respective moving images of the moving image IDs "content 100" through "content 900".

The example of FIG. 11 illustrates that the respective projection moving images of the projection moving images IDs "M201A," "M201B" through "M405B" are generated from the moving image of the moving image ID "content 400".

In addition, the example of FIG. 11 illustrates that the projection moving image of the projection moving image ID "M201A" is projected by the projector of the projector ID "PJ201A," which is placed at a position corresponding to the windowpane of the window ID "W201". Similarly, it is illustrated that the projection moving images of the projection moving images IDs "M201B" through "M405B" are projected by the projectors of the projector IDs "PJ201B" through "PJ405B," respectively.

### [9. Details of Schedule Generating Processing]

Next, the details of schedule generating processing (step S704) performed by the schedule generating unit 372 will be described.

### (1) Description of Schedule Generating Screen

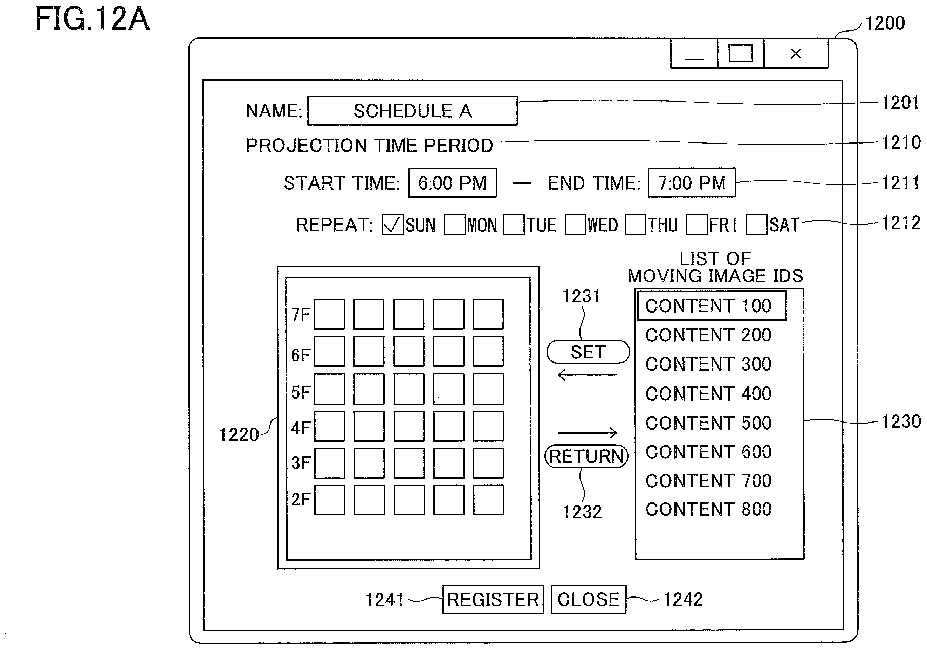

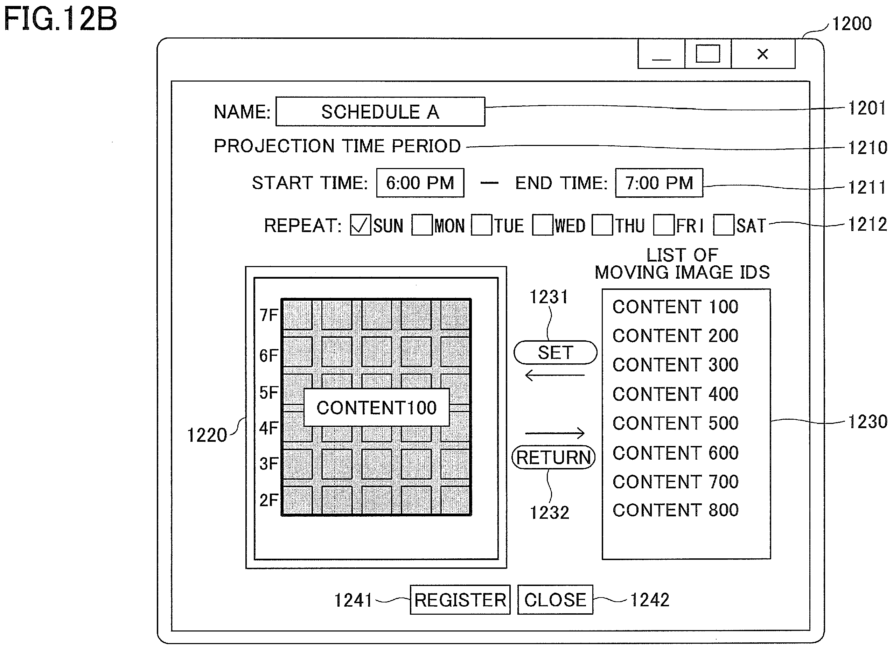

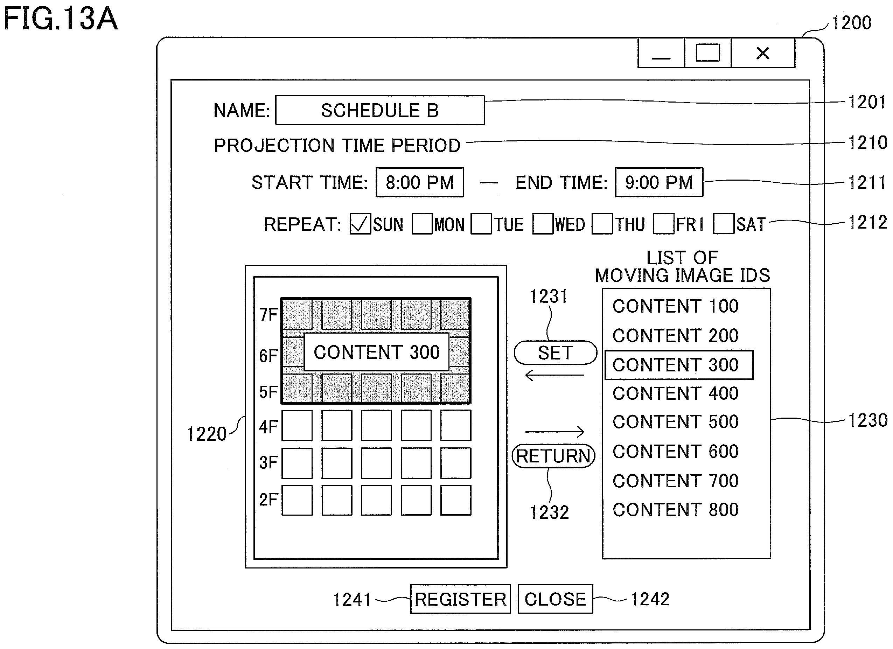

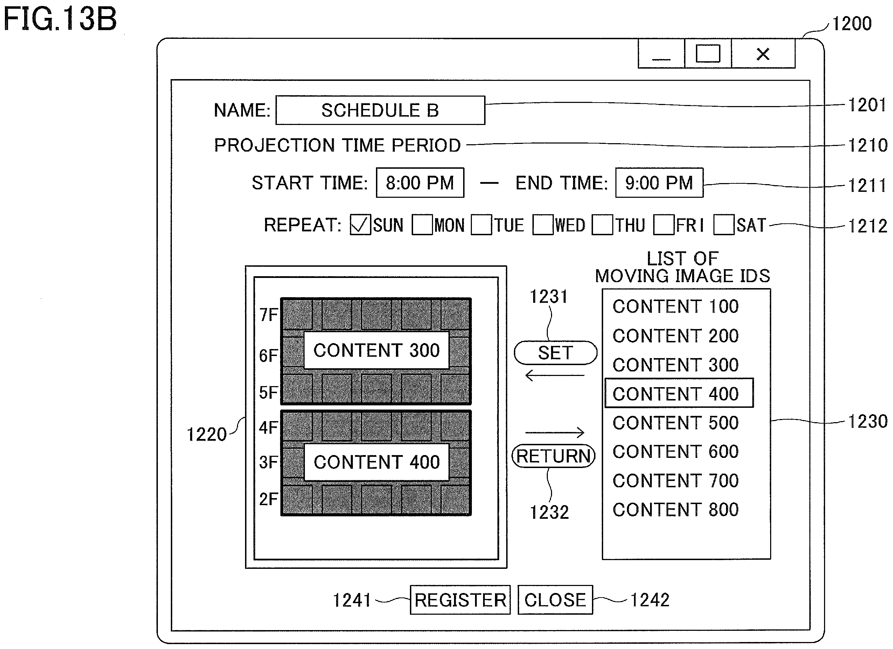

First, a schedule generating screen displayed on the display unit 405 in the schedule generating processing will be described. FIGS. 12A and 12B and FIGS. 13A and 13B are first drawings and second drawings illustrating examples of the schedule generating screen.

As illustrated in FIGS. 12A and 12B and FIGS. 13A and 13B, a schedule generating screen 1200 includes a name input field 1201 in which a schedule name to register is entered and a projection time period input field 1210 in which a projection time period is entered.

Further, the projection time period input field 1210 includes a time input field 1211 in which both a projection start time at which the projection of a group of projection moving images starts and a projection end time at which the projection of the group of projection moving images ends are entered. The projection time period input field 1210 also includes a day-of-week input field 1212 in which a day of the week, on which the group of projection moving images is projected, is entered.

The group of projection moving images is projected on the day of the week entered in the day-of-week input field 1212 during the time period entered in the time input field 1211. The example of FIG. 12A illustrates that a schedule for projecting the group of projection moving images on Sundays during the projection time period from 6:00 p.m. to 7:00 p.m. is entered.

Moreover, the schedule generating screen 1200 includes an area assignment field 1220 and a display field 1230 for moving image IDs.

In the display field 1230 for moving image IDs, moving image IDs contained in moving image information 600 are displayed. When a certain moving image ID is selected from the moving image IDs displayed in the display field 1230 for the moving image IDs and a "set" button 1231 is pressed, an image indicating a divided area, to which the selected moving image ID has been assigned, is superimposed in the area assignment field 1220, with the moving image ID being superimposed together. On the other hand, when a "return" button 1232 is pressed, the image superimposed in the area assignment field 1220 is removed.

FIG. 12B illustrates that the moving image ID "content 100" is selected and the "set" button 1231 is pressed. As illustrated in FIG. 8A, the moving image ID "content 100" is set to be assigned to the entire area. Therefore, an image indicating the entire area is superimposed in the area assignment field 1220, with the moving image ID being superimposed together.

Also, the schedule generating screen 1200 includes a "register" button 1241 and a "close" button 1242.

When the "register" button 1241 is pressed, processing for determining whether schedule inclusion is possible is performed. When the schedule inclusion is determined to be possible as a result of performing the processing, the schedule (name, projection time period, day of a week, divided area, and moving image ID), which has been entered on the schedule generating screen 1200, is included in schedule information belonging to the same day of the week. On the other hand, when the schedule inclusion is determined not to be possible as a result of performing the processing, a predetermined error message is displayed with suggestion to make a change in the schedule (name, projection time period, day of a week, divided area, and moving image ID) entered on the schedule generating screen 1200.

Pressing the "close" button 1242 ends the schedule generating process without the schedule entered on the schedule generating screen 1200 being included in schedule information.

The example of FIG. 13A illustrates that a schedule for projecting the group of projection moving images on Sundays during the projection time period from 8:00 p.m. to 9:00 p.m. is entered. In addition, the example of FIG. 13A illustrates that the moving image ID "content 300" is selected and the "set" button 1231 is pressed. As illustrated in FIG. 8C, the moving image ID "content 300" is set to be assigned to the divided area 1. Therefore, an image indicating the divided area 1 is superimposed in the area assignment field 1220, with the moving image ID being superimposed together.

Further, the example of FIG. 13B illustrates that the moving image ID "content 400" is additionally selected and the "set" button 1231 is pressed. As illustrated in FIG. 8D, the moving image ID "content 400" is set to be assigned to the divided area 2. Therefore, an image indicating the divided area 2 is superimposed in the area assignment field 1220, with the moving image ID being superimposed together

Moreover, FIG. 13B illustrates that one divided area (illustrated herein as the divided area 2), to which the moving image ID selected later has been assigned, does not overlap with the other divided area (illustrated herein as the divided area 1), to which the moving image ID selected first has been assigned. Thus, the image indicating the divided area (illustrated herein as the divided area 2), to which the moving image ID selected later has been assigned, is superimposed in the area assignment field 1220, with the moving image ID being superimposed together.

On the other hand, if one divided area, to which the moving image ID selected later has been assigned, overlaps with the other divided area, to which the moving image ID selected first has been assigned, a predetermined error message is displayed. In this case, selecting another moving image ID is prompted.

Also in FIGS 13A and 13B, the operations when the "register" button 1241 and the "close" button 1242 are pressed are the same as the operations described in FIG. 12B.

### (2) Flow of Schedule Generating Processing

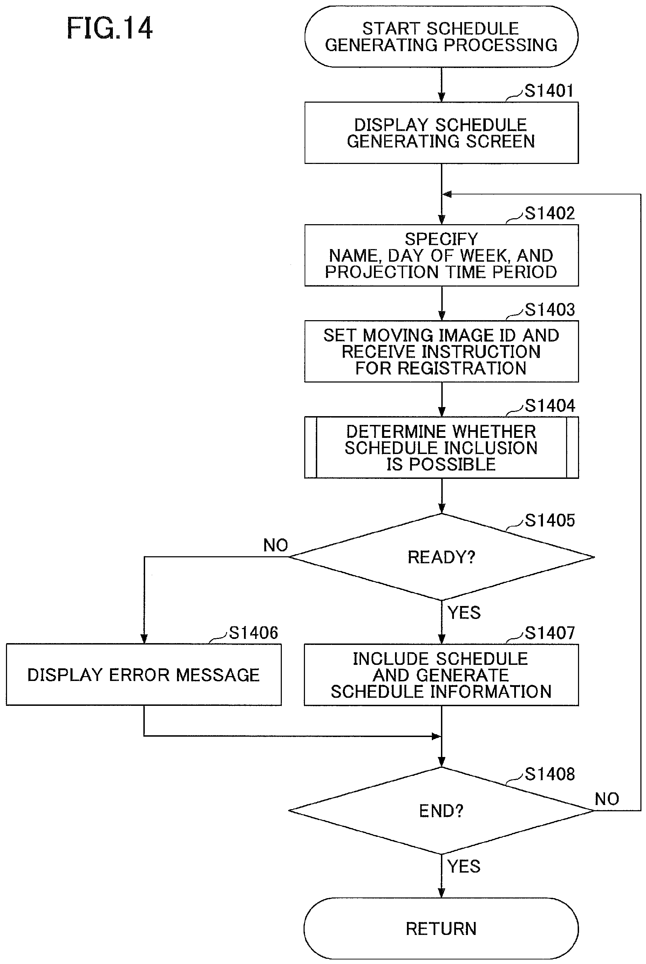

Next, a flow of the schedule generating processing will be described with reference to FIG. 14. FIG. 14 is a flowchart illustrating the flow of the schedule generating processing. Upon the completion of the image processing (step S703) performed by the projection moving image generating unit 371, the schedule generating processing starts as illustrated in FIG. 14.

In step S1401, the schedule generating unit 372 displays the schedule generating screen 1200.

In step S1402, the schedule generating unit 372 receives an input in the name input field 1201. Also, the schedule generating unit 372 receives inputs in the time input field 1211 and in the day-of-week input field 1212.

In step S1403, the schedule generating unit 372 receives the selection of a moving image ID. Also, when the "set" button 1231 is pressed, the schedule generating unit 372 receives an instruction for settings. Further, when the "register" button 1241 is pressed, the schedule generating unit 372 receives an instruction for registration.

In step S1404, the schedule generating unit 372 performs the processing for determining whether schedule inclusion is possible in order to determine whether the entered schedule can be included in the schedule information.

As a result of the processing for determining whether schedule inclusion is possible in step S1404, when the inclusion is determined not to be possible, step S1405 proceeds to step 1406.

In step S1406, the schedule generating unit 372 displays an error message on the schedule generating screen 1200.

On the other hand, as a result of the processing for determining whether inclusion is possible in step S1404, when inclusion is determined to be possible, step S1405 proceeds to step 1407.

In step S1407, the schedule generating unit 372 includes the schedule entered (name, projection time period, day of a week, divided area, and moving image ID) in schedule information belonging to the same day of the week stored in the schedule information managing unit 377.

In step S1408, the schedule generating unit 372 determines whether an instruction for ending the schedule generating processing is received. When the "close" button 1242 is not pressed (NO in step S1408), the schedule generating unit 372 determines that the instruction for ending the schedule generating processing is not received and causes the flow to return to step S1402. When the "close" button 1242 is pressed (YES in step S1408), the schedule generating unit 372 determines that the instruction for ending the schedule generating processing is received and ends the schedule generating processing.

### (3) Schedule Information

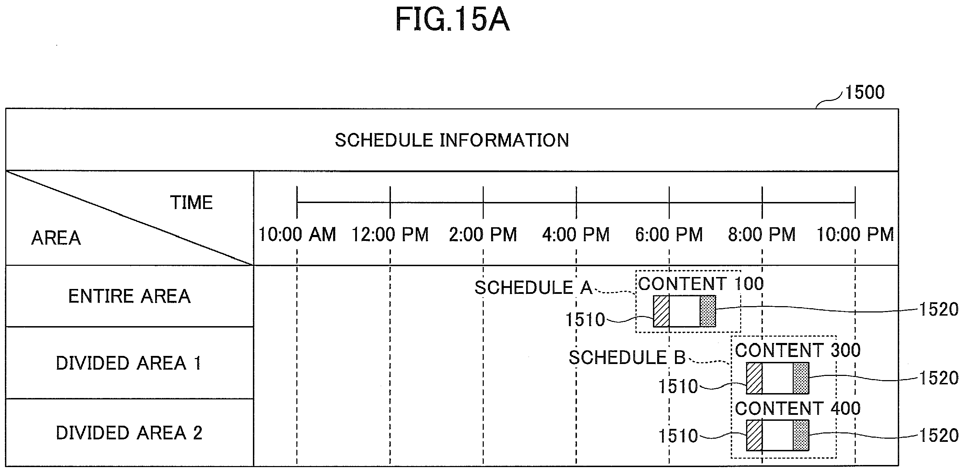

Next, schedule information generated by having the entered schedule included during the schedule generating processing will be described. FIGS. 15A through 15C are drawings illustrating an example of the schedule information, an example of the preparation interval, and an example of the end interval. As illustrated in FIG. 15A, schedule information 1500 includes information items "time" and "area."

The "time" represents a time period during which digital signage is available in the building 110. The example of FIG. 15A illustrates that digital signage is available over a time period from 10:00 a.m. to 10:00 p.m.

The "area" represents areas to which moving image IDs are assigned. Such moving image IDs are selected for respective schedules included in the schedule information 1500. The example of FIG. 15A illustrates schedule A for which the moving image ID "content 100," which has been assigned to the entire area, is selected. Also, the example of FIG. 15A illustrates schedule B for which both the moving image ID "content 100," which has been assigned to the divided area 1, and the moving image ID "content 400," which has been assigned to the divided area 2, are selected.

In addition, the example of FIG. 15A illustrates that the projection of a group of projection moving images generated based on the moving image ID "content 100" starts at 18:00 p.m. and ends at 19:00 p.m. The example of FIG. 15A also illustrates that the projection of both groups of projection moving images generated based on the moving image IDs "content 300" and "content 400" starts at 20:00 p.m. and ends at 21:00 p.m.

In the image projecting system 300 of the present embodiment, a "processing interval" is set. During the processing interval, each signage apparatus performs various processing for projecting a group of projection moving images. The processing interval includes the "preparation interval," during which the projection is prepared, and the "end interval," during which the projection of the group of projection moving images ends.

In FIG. 15A, a time period 1510 immediately before the projection start time represents the preparation interval. Also, in FIG. 15A, a time period 1520 immediately before the projection end time represents the end interval.

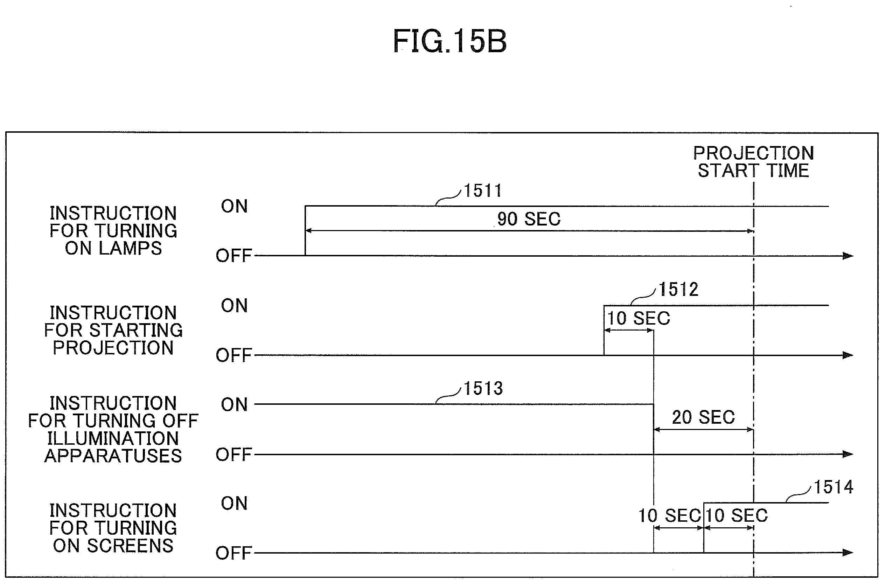

FIG. 15B is a drawing illustrating the details of processing performed by each signage apparatus during the preparation interval. According to the example of FIG. 15B, 90 seconds before the projection start time, an instruction for turning on lamps 1511 is sent to each projector, which corresponds to a respective windowpane included in the area to which the moving image ID has been assigned. This causes the lamps of the corresponding projectors to be turned on. In the present embodiment, it takes approximately 90 seconds before the lamps of the projectors become stably on after the instruction for turning on lamps is sent.

Also, according to the example of FIG. 15B, 30 seconds before the projection start time, an instruction for starting projection 1512 is sent to each projector, which corresponds to a respective windowpane included in the area to which the moving image ID has been assigned. This causes the corresponding projectors to start the projection at the projection start time.

Further, according to the example of FIG. 15B, 20 seconds before the projection start time, an instruction for turning off illumination apparatuses 1513 is sent to the illumination apparatuses 140_1 through 140_6. The instruction for turning off illumination apparatuses may be sent to the illumination apparatuses 140_1 through 140_6 all at once or may be sent to the illumination apparatuses 140_1 through 140_6 sequentially. In either case, it is assumed that, as of the projection start time, all the illumination apparatuses 140_1 through 140_6 are turned off.

Moreover, according to the example of FIG. 15B, 10 seconds before the projection start time, an instruction for turning on screens 1514 is sent to each electric screen, which corresponds to a respective windowpane included in the area to which the moving image ID has been assigned. This causes the corresponding electric screens to be turned on.

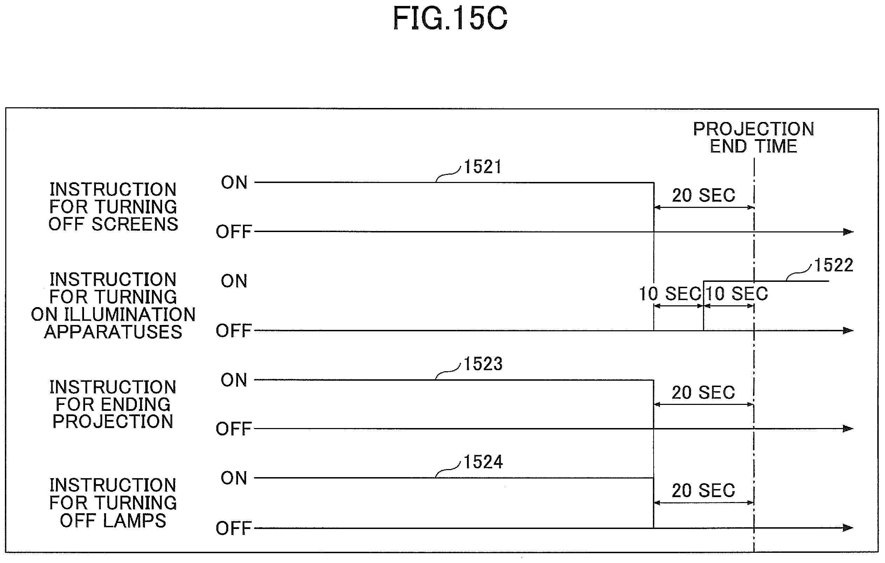

FIG. 15C is a drawing illustrating the details of processing performed by each signage apparatus during the end interval. According to the example of FIG. 15C, 20 seconds before the projection end time, an instruction for turning off screens 1521 is sent to each electric screen, which corresponds to a respective windowpane included in the area to which the moving image ID has been assigned. This causes the corresponding electric screens to be turned off by the projection end time.

Also, according to the example of FIG. 15C, 10 seconds before the projection end time, an instruction for turning on illumination apparatuses 1522 is sent to the illumination apparatuses 140_1 through 140_6. The instruction for turning on illumination apparatuses may be sent to the illumination apparatuses 140_1 through 140_6 all at once or may be sent to the illumination apparatuses 140_1 through 140_6 sequentially. In either case, it is assumed that, as of the projection end time, all the illumination apparatuses 140_1 through 140_6 are turned on.

Further, according to the example of FIG. 15C, 20 seconds before the projection end time, an instruction for ending projection 1523 is sent to each projector, which corresponds to a respective windowpane included in the area to which the moving image ID has been assigned. This causes the corresponding projectors to end the projection at the projection end time.

Further, according to the example of FIG. 15C, 20 seconds before the projection end time, an instruction for turning off lamps is sent to each projector, which corresponds to a respective windowpane included in the area to which the moving image ID has been assigned. This causes the lamps of the corresponding projectors to be turned off as of the projection end time.

### (4) Flow of processing for Determining Whether Schedule Inclusion is Possible

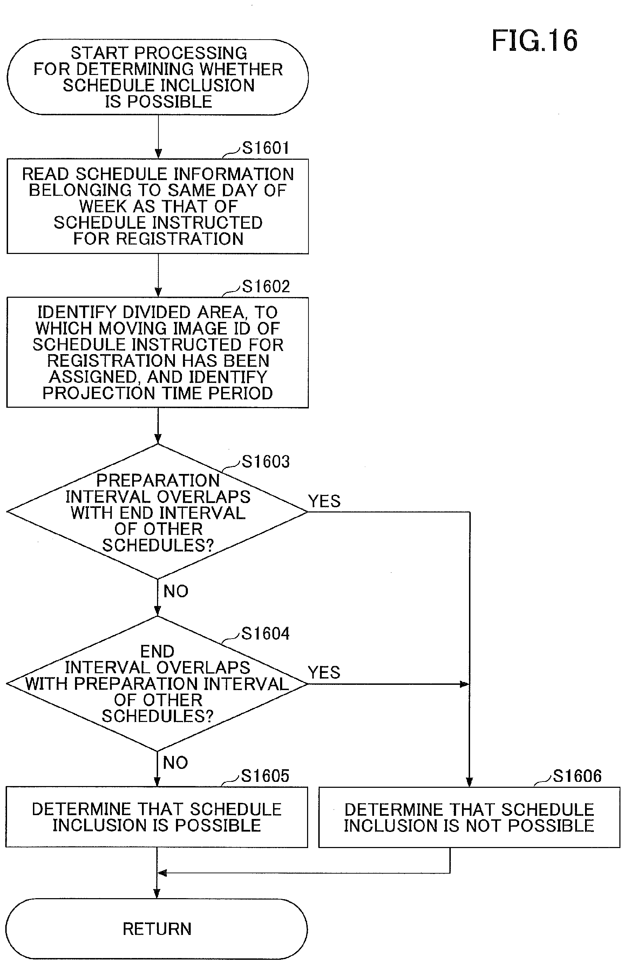

Next, the details of the processing for determining whether schedule inclusion is possible (step S1404), which is part of the schedule generating processing (FIG. 14), will be described. Fig. 16 is a flowchart illustrating a flow of the processing for determining whether schedule inclusion is possible.

In step S1601, when the schedule generating unit 372 receives an instruction for registration, the schedule generating unit 372 reads, from the schedule information managing unit 377, schedule information belonging to the same day of the week as that entered in the day-of-week input field 1212 on the schedule generating screen 1200 currently being displayed.

In step S1602, on the schedule generating screen 1200 currently being displayed, the schedule generating unit 372 identifies a divided area to which the moving image ID has been assigned, and identifies a projection start time and a projection end time entered in the time input field 1211.

In step S1603, the schedule generating unit 372 functions as a first determining part. To be more specific, the schedule generating unit 372 determines whether the preparation interval, calculated based on the identified projection start time, overlaps with the end interval of other schedules included in the schedule information read in step S1601.

In step S1603, when the preparation interval is determined to overlap with an end interval of another schedule included in the schedule information (YES in step S1603), the flow proceeds to step S1606. In step S1606, the schedule generating unit 372 determines that the preparation interval is not sufficiently secured (inclusion is not possible) before the projection start time for the schedule currently displayed on the schedule generating screen 1200.

On the other hand, in step S1603, when the preparation interval is determined not to overlap with an end interval of another schedule included in the schedule information (NO in step S1603), the flow proceeds to step S1604.

In step S1604, the schedule generating unit 372 functions as a second determining part. To be more specific, the schedule generating unit 372 determines whether the end interval, calculated based on the identified projection end time, overlaps with a preparation interval of another schedule included in the schedule information read in step S1601.

In step S1604, when the end interval is determined to overlap with a preparation interval of another schedule included in the schedule information (YES in step S1604), the flow proceeds to step S1606. In step S1606, the schedule generating unit 372 determines that, after the projection end time for the schedule currently displayed on the schedule generating screen 1200, a preparation interval is not sufficiently secured (inclusion is not possible) for the other schedule.

On the other hand, in step S1604, when the end interval is determined not to overlap with a preparation interval of another schedule included in the schedule information (NO in step S1604), the flow proceeds to step S1605.

In step S1605, the schedule generating unit 372 determines that a preparation interval is sufficiently secured (inclusion is possible) for the schedule currently displayed on the schedule generating screen 1200.

Accordingly, by performing the processing for determining whether schedule inclusion is possible, the schedule generating unit 372 avoids a schedule whose processing interval overlaps with a processing interval of another schedule from being included in the schedule information. In other words, the schedule generating unit 372 allows a schedule to be included in schedule information without the processing interval of the schedule being overlapped with the processing interval of another schedule.

### (5) Example in Which Preparation Interval Is Not Sufficiently Secured

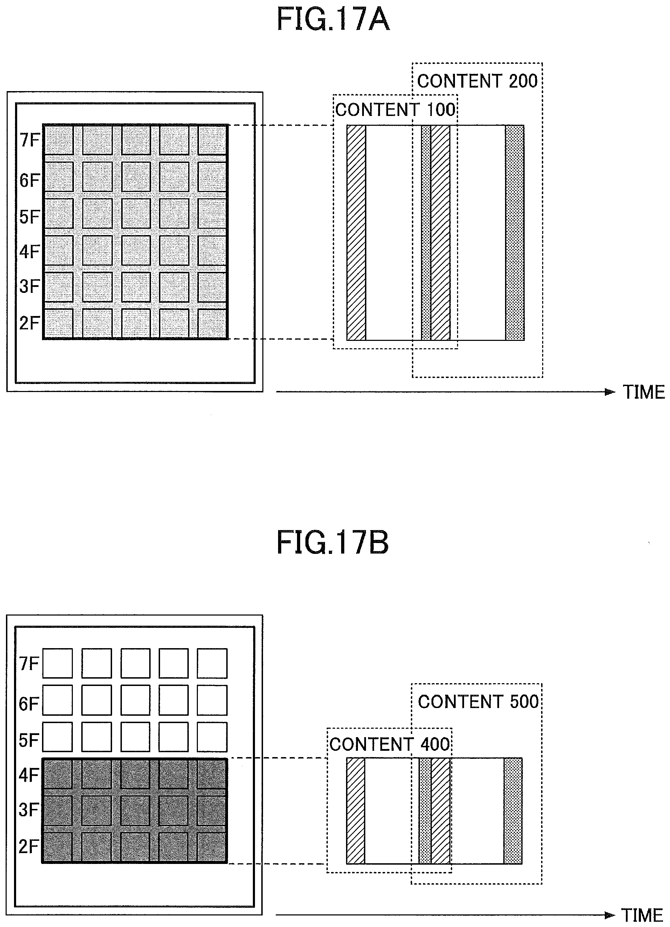

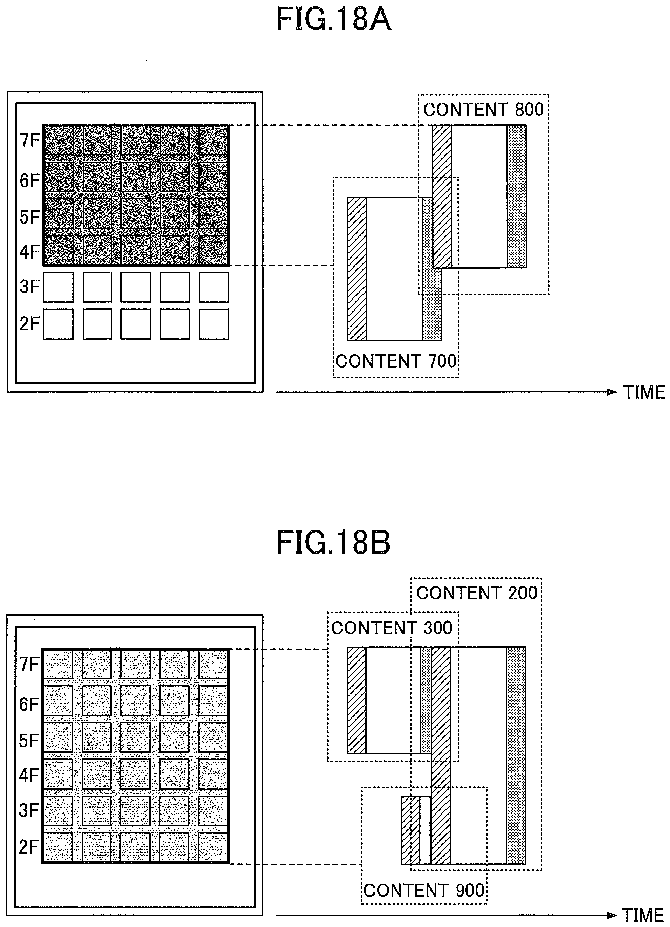

Next, a specific example will be described in which, in step S1606 of the processing for determining whether schedule inclusion is possible (FIG. 16), the preparation interval is determined not to be sufficiently secured (inclusion is not possible). FIGS. 17A through 17C and FIGS. 18A and 18B are first drawings and second drawings illustrating specific examples of the processing for determining whether schedule inclusion is possible. In FIGS. 17A through 17C and FIGS. 18A and 18B, the drawings illustrated in the left side of the sheets illustrate divided areas, to which the moving image IDs selected on the currently displayed schedule generating screen 1200 are assigned, respectively. Also the drawings illustrated in the right side of the sheets of FIGS. 17A through 17C and FIGS. 18A and 18B schematically illustrate, together with other projection time periods of other schedules, the projection time periods of the divided areas to which the corresponding moving image IDs, selected on the currently displayed schedule generating screen 1200, have been assigned. In the drawings, the horizontal axis represents a time axis.

The example of FIG. 17A illustrates that a predetermined projection time period is entered on the schedule generating screen 1200 and the moving image ID "content 200" is selected, but its preparation interval overlaps with an end interval of another schedule, for which the moving image ID "content 100" is selected. In this case, the schedule generating unit 372 determines that the preparation interval is not able to be sufficiently secured and thus outputs an error message. Accordingly, in a case where the moving image ID is assigned to the entire area, if a time interval between a projection time period of one schedule that starts first and a projection time period of another schedule that starts later is small, a sufficient preparation interval is not secured. As a result, an error message is output. By outputting such an error message to prevent the schedule from being included in the schedule information, the schedule generating unit 372 avoids the projection start time of the schedule that starts later from being delayed.

The example of FIG. 17B illustrates that a predetermined projection time period is entered on the schedule generating screen 1200 and the moving image ID "content 500" is selected, but its preparation interval overlaps with an end interval of another schedule, for which moving image ID "content 400" is selected. In this case, the schedule generating unit 372 determines that the preparation interval is not sufficiently secured and thus outputs an error message. Accordingly, when the moving image ID is assigned to the divided area, there may be a case where the preparation interval is not sufficiently secured if another schedule that starts first is assigned to the same divided area. In this case, an error message is output to the schedule generating screen 1200. By outputting such an error message to prevent the schedule from being included in the schedule information, the schedule generating unit 372 avoids the projection start time of the schedule that starts later from being delayed.

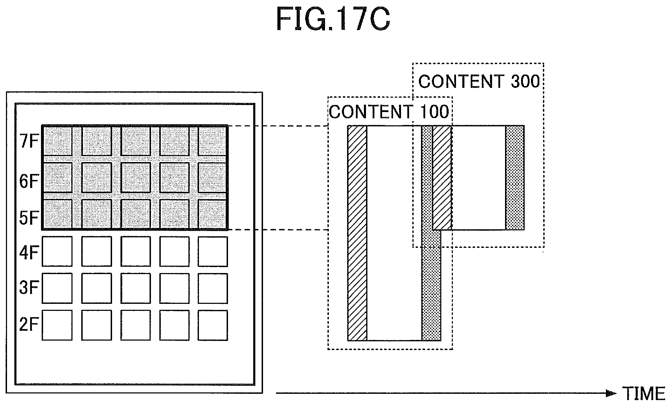

The example of FIG. 17C illustrates that a predetermined projection time period is entered on the schedule generating screen 1200 and the moving image ID "content 300" is selected, but its preparation interval overlaps with an end interval of another schedule, for which the moving image ID "content 100" is selected. In this case, the schedule generating unit 372 determines that the preparation interval is not sufficiently secured and thus outputs an error message. Accordingly, when the moving image IDs are assigned to the entire area and the divided area, respectively, there may be a case where the preparation interval is not sufficiently secured if the entire area and the divided area are partially overlapped. As a result, an error message is output. By outputting such an error message to prevent the schedule from being included in the schedule information, the schedule generating unit 372 avoids the projection start time of the schedule that starts later from being delayed.

The example of FIG. 18A illustrates that a predetermined projection time period is entered on the schedule generating screen 1200 and the moving image ID "content 800" is selected, but its preparation interval overlaps with an end interval of another schedule, for which the moving image ID "content 700" is selected. In this case, the schedule generating unit 372 determines that the preparation interval is not sufficiently secured and thus outputs an error message. Accordingly, when the moving image IDs are assigned to different divided areas, there may be a case where the preparation interval is not sufficiently secured if the divided areas partially overlap each other. As a result, an error message is output to the schedule generating screen 1200. By outputting such an error message to prevent the schedule from being included in the schedule information, the schedule generating unit 372 avoids the projection start time of the schedule that starts later from being delayed in the partially overlapping divided area.

The example of FIG. 18B illustrates that a predetermined projection time period is entered on the schedule generating screen 1200 and the moving image ID "content 200" is selected, but its preparation interval overlaps with end intervals of two other schedules. In this case, the schedule generating unit 372 determines that the preparation interval is not sufficiently secured and thus outputs an error message. Accordingly, if a time interval between a projection time period that starts third and projection time periods of the other schedules that start first and second is small, an error message is output as long as the preparation interval is not sufficiently secured. By outputting such an error message to prevent the schedule from being included in the schedule information, the schedule generating unit 372 avoids the projection start time of the schedule that starts later from being delayed in some of the entire area.

### [10. Conclusions]

As is clear from the above description, the image projecting system 300 of the present embodiment performs the following:
▪ The image projecting system 300 of the present embodiment divides a predetermined area of an outer surface of a building, in which a plurality of windowpanes are included, so as to generate a plurality of divided areas, and performs the assignment processing for assigning moving images provided by advertisers to the divided areas, respectively.
▪ The image projecting system 300 of the present embodiment performs the image processing for dividing the moving images provided by the advertiser based on the position and size of each of a plurality of windowpanes included in the divided areas, to which the moving images have been assigned. As a result, groups of projection moving images are generated.
▪ The image projecting system 300 of the present embodiment receives inputs of a schedule for projecting each projection moving image of the generated groups of projection moving images, through the corresponding projectors, onto the electric screens, which respectively correspond to the plurality of windowpanes.
▪ When a schedule is entered, the image projecting system 300 of the present embodiment determines whether a preparation interval for projection through projectors based on the entered schedule overlaps with an end interval for projection through the projectors based on another schedule, and determines whether an end interval for projection through projectors based on the entered schedule overlaps with a preparation interval for projection through the projectors based on another schedule.
▪ In response to no overlap being determined, the image projecting system 300 of the present embodiment generates schedule information by including the entered schedule.

Accordingly, a schedule whose processing interval (a preparation interval or an end interval) does not overlap with the other schedule can be properly included in schedule information in order to project a respective projection moving image in a respective divided area of a single building for a respective projection time period.

Namely, according to the image projecting system 300 of the present embodiment, it is possible to properly set a schedule in order to provide digital signage that makes combined use of a plurality of surfaces.

### [Second Embodiment]

In the configuration of the above-described first embodiment, an error message is output when an end interval calculated based on a projection end time of the entered schedule is determined to overlap with a preparation interval of another schedule. However, in the configuration of the above-described first embodiment, when an end interval calculated based on a projection end time of the entered schedule is determined to overlap with a preparation interval of the other schedule, the processing settings for the preparation interval and the end interval that overlap each other may be changed, so that the preparation interval and the end interval are changed to a non-processing interval and the entered schedule is included in the schedule information.

To be more specific, the signage control unit 373 is caused to function as a changing part, which is configured to send an instruction for ending projection only without sending an instruction for turning off screens, an instruction for turning on illumination apparatuses, or an instruction for turning off lamps before the projection end time, and is configured to change the end interval of the entered schedule to a "non-processing interval." Similarly, the signage control unit 373 is caused to function as the changing part, which is configured to send an instruction for starting projection only without sending an instruction for turning on illumination apparatuses, an instruction for turning off illumination apparatuses, or an instruction for turning on screens before the projection start time, and is configured to change a preparation interval of the other schedule to a "non-processing interval."

This prevents the end interval of the entered schedule from overlapping with the preparation interval of the other schedule, allowing the entered schedule to be included in the schedule information.

In this case, at the projection end time, the electric screens remain on, the illumination apparatuses remain off, and the projector lamps remain on. As a result, the projection of the other schedule can start smoothly at the projection start time.

In addition, the changes in the processing settings for the preparation interval and the end interval are intended to be made to the signage apparatuses only, which correspond to the windowpanes included in the area where the intervals overlap. For example, in the case of FIG. 17C, only the instruction for ending projection and the instruction for starting projection are sent to the signage apparatuses corresponding to the windowpane in the divided area 1 (the processing settings for the end interval and the preparation interval are changed). On the other hand, the instruction for turning off screens, the instruction for turning on illumination apparatuses, the instruction for turning off lamps, and the instruction for ending projection are sent to the signage apparatuses corresponding to the windowpanes included in the divided area 2 (no processing setting for the end interval is changed). Also, the instruction for turning on illumination apparatuses, the instruction for starting projection, the instruction for turning off illumination apparatuses, and the instruction for turning on screens are sent to the signage apparatuses, which correspond to the windowpanes included in the divided area 2 (no processing setting for the preparation interval is changed).

In this way, in the present embodiment, when the processing intervals overlap each other, it is possible to prevent the processing intervals from overlapping by changing the processing settings for the overlapping processing intervals so as to allow the processing intervals to act as a non-processing interval. Namely, a schedule can be set without any overlapping processing intervals.

In the present embodiment, the example in which the end interval of the entered schedule overlaps with a preparation interval of another schedule has been described. The same applies to a case where the preparation interval of the entered schedule overlaps with an end interval of another schedule.

Also, in the present embodiment, examples in which the signage control unit 373 is configured to automatically change to the non-processing interval have been described. However, upon an error message being output, the change to the non-processing interval may be made manually. In this case, the signage control unit 373 may be configured to receive instructions for manually changing to a non-processing interval all at once. Alternatively, the signage control unit 373 may be configured to receive the instructions for manually changing to a non-processing interval separately for each instruction (for example, an instruction for turning on illumination apparatuses, an instruction for turning off illumination apparatuses, and an instruction for turning on screens).

### [Third Embodiment]

In the above-described first embodiment, examples have been described in which the projection moving image generating unit 371 is configured to project the projection moving image to corresponding projectors at the timing when the group of projection moving images is generated. However, if the projection moving image is sent to the projectors during the projection time period or during the processing interval, the processing load on the projectors increases. Therefore, the projection moving image generating unit 371 may be configured to send the projection moving image during a time period other than the projection time period and other than the processing interval.

In the case of a specific divided area only falling within the projection time period or within the processing interval, it is no problem for the projection moving image to be sent to projectors corresponding to the windowpanes included in a divided area other than the specific divided area. In such a case, the projection moving image generating unit 371 identifies the divided area that falls within the projection time period and within the processing interval, and sends the generated projection moving image to the projectors corresponding to the windowpanes included in a divided area other than the identified divided area. To the projectors corresponding to the windowpanes included in the identified divided areas, the generated projection moving image is sent after the elapse of the projection time period and after the elapse of the processing interval.

Accordingly, it is possible to avoid a situation in which a failure occurs in association with an increased processing load on projectors.

### [Other Embodiments]

In the above-described first embodiment, regardless of the number of signage apparatuses included in a divided area, a preparation interval and an end interval are both set for a fixed period of time. However, the period of the preparation interval and the period of the end interval may be changed according to the number of signage apparatuses included in the divided area. Also, in the processing for determining whether schedule inclusion is possible (FIG. 16), the schedule generating unit 372 may be configured to determine whether processing intervals overlap each other based on the period of time, which has been changed according to the number of signage apparatuses.

Also, in the above-described first embodiment, the end interval is provided immediately before the projection end time. However, the end interval may be provided immediately after the projection end time or may be extended over a projection end time.

In addition, in the above-described first embodiment, the single schedule generating screen 1200 has been described, to which only a single projection time period can be input. However, a plurality of projection time periods may be input to the single schedule generating screen 1200.

Further, in the above-described first embodiment, no mention has been made of a display of other schedules on the schedule generating screen 1200. However, by displaying schedule information on the schedule generating screen 1200, other schedules may be made visible. This allows the schedule generating unit 372 to indicate an area where processing intervals are overlapped.

Moreover, in the above-described first embodiment, two projectors are placed in a single windowpane. However, the number of projectors placed in a single windowpane is not limited to two projectors. For example, the number of projectors placed in a single windowpane may be one projector. Also, the number of projectors placed in a single windowpane may be changed for each windowpane.

Furthermore, in the above-described first embodiment, windowpanes having a rectangular plane shape have been described. However, the shape of each windowpane is not necessarily rectangular. Also, the surface shape of each windowpane may be a curved surface.

Also, in the above-described first embodiment, the examples in which each windowpane included in the predetermined area has the same size have been described. However, the size of each windowpane is not required to be the same. When the size of each windowpane is different, the projection range of each projector is adjusted and the image processing is performed according to each size of the windowpanes.

Also in the above-described first embodiment, examples in which the projection moving image is generated based on the moving image provided by an advertiser have been described. However, a projection still image may be generated based on a still image provided by an advertiser.

Also, in the above-described first embodiment, the information processing apparatus 370 that includes the projection moving image generating unit 371, the schedule generating unit 372, and the signage control unit 373 has been described. However, some of these functions may be implemented in other signage apparatuses.

Also, in the above-described first embodiment, the projection targets onto which moving images are projected have been described as being windowpanes installed in a predetermined area of the outer surface of the building 110. However, such projection targets are not limited to windowpanes and may be other light-transmitting surfaces. Also, such light-transmitting surfaces are not necessarily installed in the predetermined area of the outer surface of the building 110 and may be installed in any other predetermined area inside the building 110. Alternatively, such light-transmitting surfaces may be light-transmitting surfaces installed in an object other than buildings.

Further, the present invention is not limited to the configurations of the above-described embodiments and the configurations described herein may be combined with other elements. Various variations and modifications may be made without departing from the scope of the present invention.

### [Related-Art Documents]

[Patent Document 1] Japanese Unexamined Patent Application Publication No. 2015-26992
[Patent Document 2] Japanese Unexamined Patent Application Publication No. 2016-85435

## Claims

1. An image projecting system comprising:
an area dividing part configured to divide a predetermined area in which a plurality of surfaces are included so as to generate a plurality of divided areas;
an image dividing part configured to divide, based on positions and sizes of the plurality of surfaces included in a single divided area of the plurality of divided areas, a single image assigned to the single divided area into a plurality of divided images;
an input part configured to input a schedule for projecting, through projectors that respectively correspond to the plurality of surfaces included in the single divided area, the plurality of divided images onto projection surfaces that respectively correspond to the plurality of surfaces included in the single divided area; and
a generating part configured to generate schedule information by including the schedule without overlap, of a processing interval for projection of the plurality of divided images through the projectors based on the schedule, with a processing interval for projection through any of the projectors based on another schedule.

2. The image projecting system according to claim 1, further comprising:
a first determining part configured to determine whether a preparation interval that is a processing interval for preparing projection through the projectors based on the schedule overlaps with a processing interval that is an end interval for ending projection through any of the projectors based on another schedule; and
a second determining part configured to determine whether an end interval that is a processing interval for ending projection through the projectors based on the schedule overlaps with a preparation interval that is a processing interval for preparing projection through any of the projectors based on the other schedule,
wherein the generating part is configured to generate the schedule information by including the schedule in response to no overlap being determined by the first determining part and by the second determining part.

3. The image projecting system according to claim 2, wherein an error message is output in response to an overlap being determined by either the first determining part or the second determining part.

4. The image projecting system according to claim 2, further comprising a changing part configured to change, upon an overlap being determined by either the first determining part or the second determining part, processing settings for the processing intervals that have been determined to overlap each other.

5. The image projecting system according to any one of claims 1 to 4, wherein the image dividing part sends the plurality of divided images to the projectors that respectively correspond to the plurality of surfaces included in the single divided area during a time period other than a projection time period and a processing interval of the projectors.

6. An image projecting method comprising:
dividing a predetermined area in which a plurality of surfaces are included so as to generate a plurality of divided areas;
based on positions and sizes of the plurality of surfaces included in a single divided area of the plurality of divided areas, dividing a single image assigned to the single divided area into a plurality of divided images;
inputting a schedule for projecting, through projectors that respectively correspond to the plurality of surfaces included in the single divided area, the plurality of divided images onto projection surfaces that respectively correspond to the plurality of surfaces included in the single divided area; and
generating schedule information by including the schedule without overlap, of a processing interval for projection of the plurality of divided images through the projectors based on the schedule, with a processing interval for projection through any of the projectors based on another schedule.
